# EUROPEAN PATENT APPLICATION

(11) **EP 4 685 945 A1**
(43) Date of publication of application: **28.01.2026**
(21) Application number: 24774914.6
(22) Date of filing: 19.03.2024
(51) Int. Cl.: H01M 50/204, H01M 50/213, H01M 50/291, H01M 50/507

(54) **CELL HOLDER, BATTERY MODULE, AND BATTERY PACK**

(30) Priority: 23.03.2023 JP 2023046797
(71) Applicant: Sanoh Industrial Co., Ltd., Shibuya-ku Tokyo 150-0002 (JP)
(72) Inventor: ITO, Yukishige, Koga-shi, Ibaraki 306-0041 (JP); NISHIYAMA, Junya, Koga-shi, Ibaraki 306-0041 (JP); NAGASHIMA, Takayuki, Koga-shi, Ibaraki 306-0041 (JP); TSUNAKAWA, Yasuyuki, Koga-shi, Ibaraki 306-0041 (JP); NAKAMOTO, Yuji, Koga-shi, Ibaraki 306-0041 (JP); TAKAGI, Aiko, Koga-shi, Ibaraki 306-0041 (JP)
(74) Representative: Bryn Aarflot AS
(86) International application number: PCT/JP2024/010643
(87) International publication number: WO 2024/195779

(57) **Abstract**

An object is to promote heat dissipation from a plurality of battery cells. A cell holder 102 holds battery strings S1, S2, S3, S4, S5, S6, and S7 in which a plurality of battery cells S is arranged in a first direction intersecting an axial direction of the battery cell S. The cell holder 102 includes a holding unit 104 and an opening section 105. The holding unit 104 holds the battery strings S1, S2, S3, S4, S5, S6, and S7 such that the battery strings S1, S2, S3, S4, S5, S6, and S7 are arranged at intervals in a second direction intersecting both the axial direction and the first direction. The opening section 105 allows a gas to flow in and out between the battery strings S1, S2, S3, S4, S5, S6, and S7 held by the holding unit 104.

## Description

### TECHNICAL FIELD

The present invention relates to a cell holder, a battery module, and a battery pack.

### BACKGROUND ART

The battery module described in Patent Document 1 includes a plurality of battery cells, a module housing, a busbar, and a current collecting plate. Coupling protrusions and guide grooves for guiding arrangement positions of other battery modules are formed on outer side walls of the module housing. The module housing includes an upper case and a lower case.

### RELATED ART DOCUMENTS

### PATENT DOCUMENTS

Patent Document 1: Japanese Patent No. 6768968

### SUMMARY OF THE INVENTION

### PROBLEMS TO BE SOLVED BY THE INVENTION

In the battery module of Patent Document 1, outer side surfaces of the plurality of battery cells are all surrounded by a first housing section of the upper case and a second housing section of the lower case. Therefore, the plurality of battery cells is unlikely to come into contact with air, which may make it difficult to dissipate heat from the plurality of battery cells. In other words, there is room for improvement in promoting heat dissipation from the plurality of battery cells.

An object of the present invention is to promote heat dissipation from a plurality of battery cells.

### MEANS FOR SOLVING THE PROBLEMS

A cell holder according to an embodiment is a cell holder configured to hold a plurality of battery strings in which a plurality of battery cells is arranged in a first direction intersecting an axial direction of the battery cell, and the cell holder includes: a holding unit configured to hold the plurality of battery strings such that the plurality of battery strings is arranged at intervals in a second direction intersecting both the axial direction and the first direction; and an opening section configured to allow a gas to flow in and out between the plurality of battery strings held by the holding unit.

A battery module according to an embodiment includes: a plurality of battery strings in which a plurality of battery cells is arranged in a first direction intersecting an axial direction of the battery cell; and a cell holder configured to hold the plurality of battery strings such that the plurality of battery strings is arranged at intervals in a second direction intersecting both the axial direction and the first direction, and in each of the plurality of battery strings, the battery cells are arranged, with a polarity of terminal portions of the battery cells aligned, and in the plurality of battery strings, the polarities of the terminal portions alternately differ in the second direction.

A battery pack according to an embodiment includes: a plurality of battery strings in which a plurality of battery cells is arranged in a first direction intersecting an axial direction of the battery cell; a cell holder configured to hold the plurality of battery strings such that the plurality of battery strings is arranged at intervals in a second direction intersecting both the axial direction and the first direction; a conductive unit extending in the first direction and configured to electrically connect terminal portions of the plurality of battery cells; and a case unit configured to house the plurality of battery strings, the cell holder, and the conductive unit and having a pair of side walls located at an interval in the first direction, the pair of side walls having hole sections that are open in the first direction.

### EFFECTS OF THE INVENTION

With the cell holder, the battery module, and the battery pack according to the embodiments above, it is possible to promote the heat dissipation from the plurality of battery cells.

### BRIEF DESCRIPTION OF THE DRAWINGS

[FIG. 1] is a perspective view illustrating an appearance of a battery pack according to the first embodiment.
[FIG. 2] is an exploded view of the battery pack according to the first embodiment.
[FIG. 3] is a plan view illustrating cell groups of the battery pack according to the first embodiment.
[FIG. 4] is a perspective view illustrating a lower case and a lower guide member of the battery pack according to the first embodiment, as viewed obliquely from above.
[FIG. 5] is a perspective view illustrating an upper case and an upper guide member of the battery pack according to the first embodiment, as viewed obliquely from below.
[FIG. 6] is a perspective view illustrating a busbar unit of the battery pack according to the first embodiment.
[FIG. 7] is a perspective view illustrating a module assembly in which busbar units are provided on two battery modules according to the first embodiment.
[FIG. 8] is a plan view illustrating an arrangement relationship between a plurality of battery strings and upper and lower busbar units in the battery pack according to the first embodiment.
[FIG. 9] is a perspective view illustrating the battery module according to the first embodiment.
[FIG. 10] is a bottom view of a first member of the battery pack according to the first embodiment, as viewed from below.
[FIG. 11] is a perspective view of the first member of the battery pack according to the first embodiment, in which the first member is turned upside down.
[FIG. 12] is a plan view of a second member of the battery pack according to the first embodiment.
[FIG. 13] is a perspective view of the second member of the battery pack according to the first embodiment, as viewed obliquely from above.
[FIG. 14A] is a side view illustrating a state in which the first member of the battery pack according to the first embodiment is turned upside down and placed on the upper case.
[FIG. 14B] is a side view illustrating a state in which the first member in FIG. 14A holds lower portions of a plurality of battery cells.
[FIG. 14C] is a side view illustrating a state in which upper portions of the plurality of battery cells in FIG. 14B are held by the second member.
[FIG. 14D] is a side view illustrating a state in which the busbar unit and a terminal are attached to the second member in FIG. 14C.
[FIG. 14E] is a side view illustrating a state in which the busbar unit and a terminal are attached to the first member in FIG. 14D.
[FIG. 15] is a plan view illustrating a state in which the upper case is removed from the battery pack in FIG. 1.
[FIG. 16] is a cross-sectional view of the battery module illustrated in FIG. 7 (cross-sectional view taken along line A-A in FIG. 7).
[FIG. 17] is an explanatory diagram illustrating a state in which air flows between the plurality of battery strings of the battery pack according to the first embodiment.
[FIG. 18] is an explanatory diagram illustrating a state in which air flows inside the battery pack and between the plurality of battery strings according to the first embodiment.
[FIG. 19] is a plan view illustrating an arrangement relationship between a case unit and two battery modules of a battery pack according to the second embodiment.
[FIG. 20] is an explanatory diagram illustrating a first interval and a second interval in the battery pack according to the second embodiment.
[FIG. 21] is a perspective view illustrating a battery pack according to the third embodiment.
[FIG. 22] is a perspective view illustrating a state in which an upper case of the battery pack according to the third embodiment is removed.
[FIG. 23] is an explanatory diagram illustrating a first interval and a second interval in the battery pack according to the third embodiment.
[FIG. 24] is a perspective view of a battery pack according to the fourth embodiment.
[FIG. 25] is an exploded view of the battery pack according to the fourth embodiment.
[FIG. 26] is a perspective view illustrating a state in which an upper case of the battery pack according to the fourth embodiment is removed.
[FIG. 27] is an explanatory diagram illustrating a state in which air flows inside the battery pack and between a plurality of battery strings according to the fourth embodiment.

### DETAILED DESCRIPTION OF PREFERRED EMBODIMENTS

Hereinafter, the first, second, third and fourth embodiments of the present invention will be described in detail with reference to the drawings. Note that, in all the drawings referred to for describing the first, second, third and fourth embodiments, the same or substantially same configurations and elements are denoted by the same reference characters, and repetitive descriptions will be omitted. In the following description, unless otherwise specified, terms such as "first" and "second" are used only to distinguish components from one another, and do not indicate a specific order or sequence.

### [First embodiment]

The first embodiment will be described in detail with reference to the drawings.

### [Configuration of battery pack]

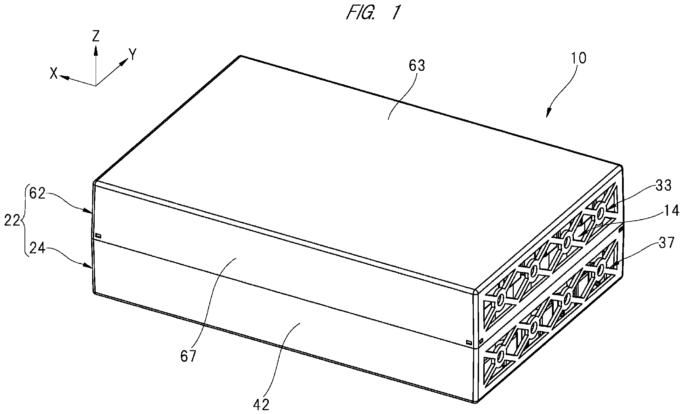

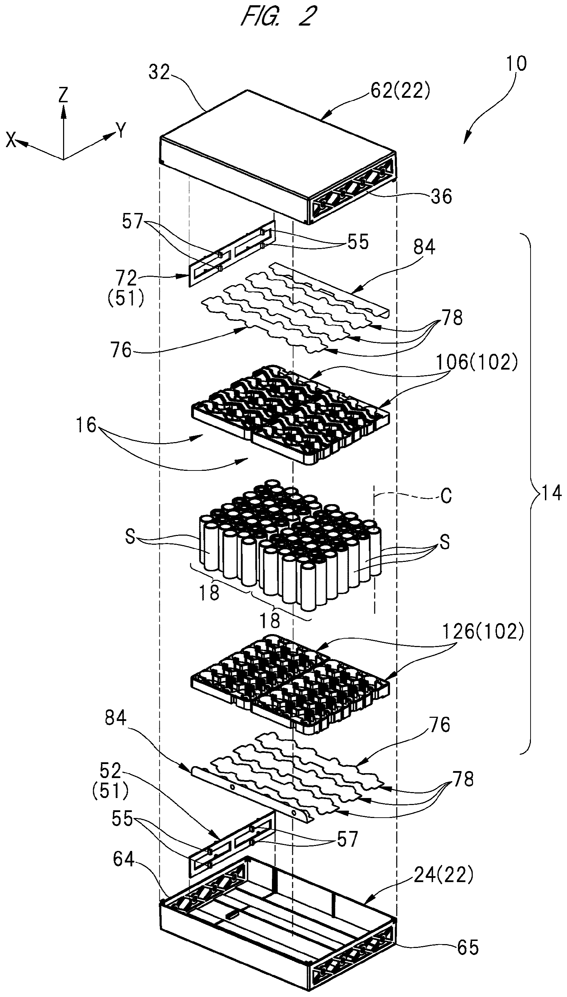

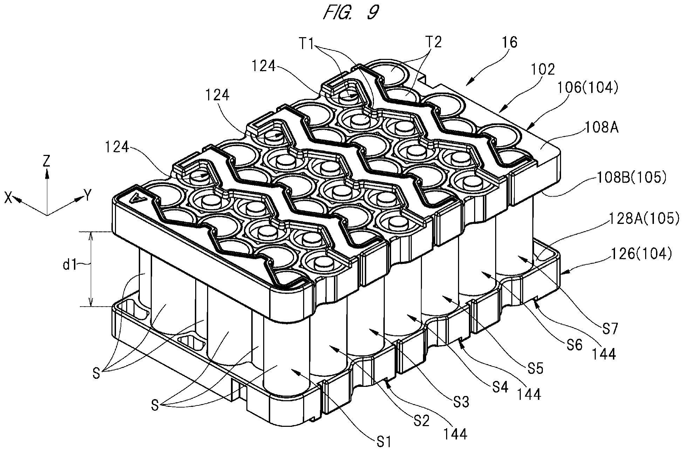

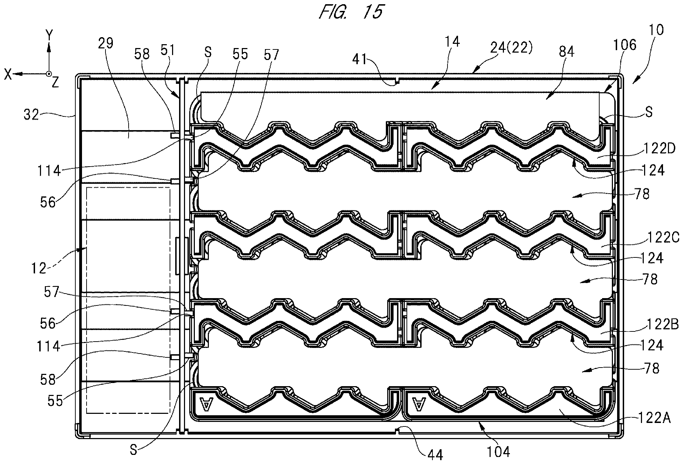

FIG. 1 is a perspective view illustrating an appearance of a battery pack 10 according to the first embodiment. FIG. 2 is an exploded view illustrating the components of the battery pack 10. The battery pack 10 is provided with a battery management system (BMS) 12 (FIG. 15). The BMS 12 controls charging and discharging of a battery module 16 (FIG. 9) described below.

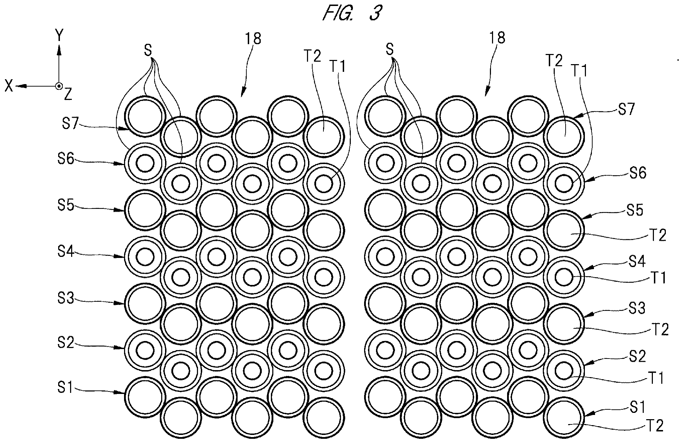

As illustrated in FIG. 2, the battery pack 10 includes, for example, two cell groups 18, a case unit 22, two busbar units 76, two terminals 84, and two cell holders 102. Note that one cell group 18 and one cell holder 102 are collectively referred to as one battery module 16 (FIG. 9). The cell group 18 has battery strings S1, S2, S3, S4, S5, S6, and S7 (FIG. 3) described below.

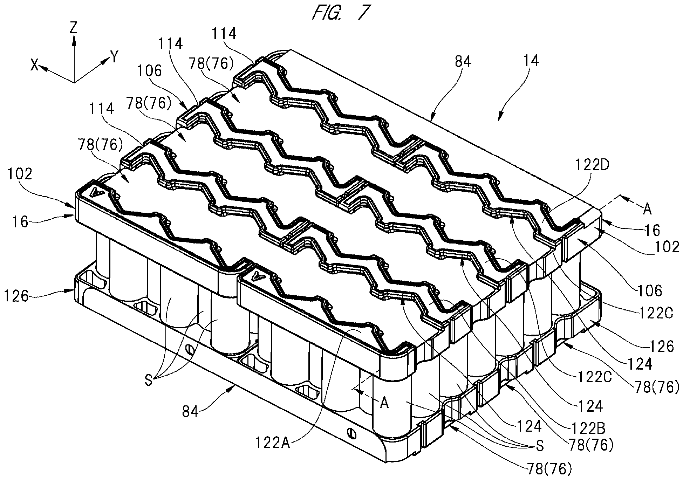

In the battery pack 10, as an example, two battery modules 16 are arranged in the X direction. An assembly obtained by connecting the two battery modules 16 using the two busbar units 76 and the two terminals 84 is referred to as a module assembly 14 (FIG. 7). Note that the BMS 12 (FIG. 15) is not illustrated in FIG. 2.

### <Cell group>

As illustrated in FIG. 3, the two cell groups 18 are arranged in the X direction described below. The cell group 18 includes the battery strings S1, S2, S3, S4, S5, S6, and S7. The battery strings S1, S2, S3, S4, S5, S6, and S7 are an example of a plurality of battery strings, and are arranged at intervals in the Y direction described below. As an example, each of the battery strings S1, S2, S3, S4, S5, S6, and S7 includes six battery cells S arranged in the X direction.

As illustrated in FIG. 2, the battery cell S is formed in a cylindrical shape as a whole and has a central axis C. In the first embodiment, the direction in which the central axis C of the battery cell S extends is defined as the Z direction. The Z direction is an example of an axial direction of the battery cell S. Terminal portions T1 and T2 (FIG. 3) with different shapes and polarities (positive and negative) are formed at one end portion and the other end portion of the battery cell S in the Z direction, respectively. Note that the polarity of the terminal portion T1 is positive. The polarity of the terminal portion T2 is negative. As an example, the battery cell S is a lithium ion battery. In a lithium ion battery, a voltage is generated by a chemical reaction, causing a current to flow. Note that the battery cell S is not limited to a lithium ion battery. Another example is a nickel-metal hydride battery.

In the first embodiment, as an example of the arrangement of the battery cells S, the Z direction is along the up-down direction (vertical direction). In addition, in each of the battery strings S1, S2, S3, S4, S5, S6, and S7 (FIG. 3), the direction in which the six battery cells S are arranged is defined as the X direction. The X direction is an example of a first direction intersecting an axial direction. Furthermore, the direction intersecting both the Z direction and the X direction is defined as the Y direction. The Y direction is an example of a second direction. The X direction, the Y direction, and the Z direction are perpendicular to each other.

When distinguishing between one side and the other side in the Z direction, one side is defined as the upper side and the other side as the lower side. When distinguishing between one side and the other side in the X direction, one side is defined as the front side and the other side as the rear side. When distinguishing between one side and the other side in the Y direction, one side is defined as the right side and the other side as the left side. The tip side of the arrows X, Y, and Z in each diagram represents one side, and the base side thereof represents the other side.

As illustrated in FIG. 3, as an example, 42 battery cells S in total, six in the X direction and seven in the Y direction, are used in the cell group 18. In other words, in the cell group 18, the battery strings S1, S2, S3, S4, S5, S6, and S7 each having six battery cells S are arranged in the Y direction. Note that a total of 84 battery cells S are used in the battery module 16.

In each of the battery strings S1, S2, S3, S4, S5, S6, and S7, six battery cells S are arranged in the X direction, with the polarity of their terminal portions T1 or terminal portions T2 of the battery cells S aligned. Furthermore, in the battery strings S1, S2, S3, S4, S5, S6, and S7, the polarity of the terminal portions T1 and the polarity of the terminal portions T2 alternately differ in the Y direction. Note that, in the battery strings S1, S2, S3, S4, S5, S6, and S7, seven battery cells S are arranged in a straight line in the Y direction. In addition, in the cell group 18, the six battery cells S are arranged in a zigzag arrangement in each of the battery strings S1, S2, S3, S4, S5, S6, and S7. In other words, the six battery cells S are arranged, with the positions of two adjacent battery cells S all shifted in the Y direction.

### <Case unit>

As illustrated in FIG. 2, the case unit 22 is divided into upper and lower portions, and includes a lower case 24 and an upper case 62. The lower case 24 is provided with a lower guide member 52. The upper case 62 is provided with an upper guide member 72. The case unit 22 houses the battery strings S1, S2, S3, S4, S5, S6, and S7 (FIG. 3), as well as the two cell holders 102, the two busbar units 76, and the two terminals 84 described below. Furthermore, the case unit 22 has front walls 32 and 64 and rear walls 36 and 65 described below. An attachment plug or connector (not illustrated) can be attached to the case unit 22.

The lower guide member 52 and the upper guide member 72 are collectively referred to as a guide unit 51. In other words, the guide unit 51 includes the lower guide member 52 and the upper guide member 72. The guide unit 51 is provided in the case unit 22. The guide unit 51 is an example of a positioning unit that positions the two cell holders 102 in the X and Y directions. The upper guide member 72 and the lower guide member 52 are an example of a wall member that stands upright in the Z direction inside the case unit 22.

### (Lower case)

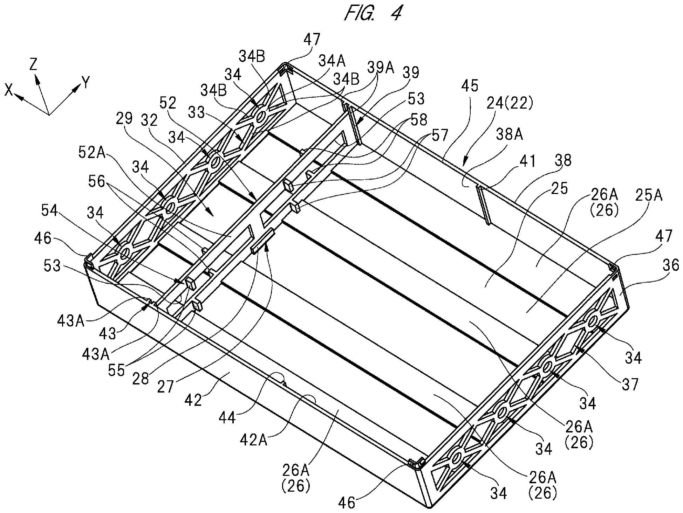

As illustrated in FIG. 4, the lower case 24 has a bottom wall 25, a front wall 32, a rear wall 36, a right wall 38, and a left wall 42. The bottom wall 25 is a plate-like portion having a predetermined thickness in the Z direction, and is formed in a rectangular shape whose dimension in the X direction is longer than its dimension in the Y direction. An upper surface 25A of the bottom wall 25 is provided with four flat portions 26.

The four flat portions 26 are located at intervals in the Y direction and extend in the X direction. Each of the four flat portions 26 has a flat surface 26A. The position of the flat surface 26A in the Z direction is higher than the position of the upper surface 25A in the Z direction. An insertion portion 27 is provided at the center of the upper surface 25A in the Y direction. The insertion portion 27 is made up of two vertical walls 28 that stand upright toward the upper side from the upper surface 25A. Note that the illustration of the vertical wall 28 on the front side is omitted in FIG. 4.

The front wall 32 stands upright toward the upper side from the front end portion of the bottom wall 25. The front wall 32 has a hole section 33. The hole section 33 penetrates the front wall 32 in the X direction. In other words, the hole section 33 is open in the X direction. The hole section 33 is made up of a plurality of through holes partitioned by four partitions 34. The partition 34 has one annular portion 34A and four straight portions 34B extending radially from the annular portion 34A.

The rear wall 36 stands upright toward the upper side from the rear end portion of the bottom wall 25. The rear wall 36 has a hole section 37. The hole section 37 penetrates the rear wall 36 in the X direction. In other words, the hole section 37 is open in the X direction. Like the hole section 33, the hole section 37 is made up of a plurality of through holes partitioned by four partitions 34. The front wall 32 and the rear wall 36 are an example of a pair of side walls located at an interval in the X direction.

The right wall 38 stands upright toward the upper side from the right end portion of the bottom wall 25. An insertion portion 39 and a rib 41 are provided on an inner surface 38A of the right wall 38. The insertion portion 39 has two vertical walls 39A that protrude to the left side from the inner surface 38A. The rib 41 is formed in a columnar shape that protrudes to the left side from the inner surface 38A and extends in the Z direction. The rib 41 is located at the center between the rear wall 36 and the insertion portion 39 in the X direction.

The left wall 42 stands upright toward the upper side from the left end portion of the bottom wall 25. An insertion portion 43 and a rib 44 are provided on an inner surface 42A of the left wall 42. The insertion portion 43 has two vertical walls 43A that protrude to the right side from the inner surface 42A. The rib 44 is formed in a columnar shape that protrudes to the right side from the inner surface 42A and extends in the Z direction. The rib 44 is located at the center between the rear wall 36 and the insertion portion 43 in the X direction. Note that the insertion portions 27, 39, and 43 are located at the same positions in the X direction. No hole sections are formed in the right wall 38 and the left wall 42.

The upper end positions of the front wall 32, the rear wall 36, the right wall 38, and the left wall 42 are aligned. In other words, the lower case 24 has an upper end surface 45. The upper end surface 45 constitutes the division surface of the case unit 22. At the corners of the lower case 24, two claw portions 46 that protrude toward the upper side beyond the upper end surface 45 and two recessed portions 47 that are recessed toward the lower side beyond the upper end surface 45 are formed. Note that the space between the front wall 32 and the lower guide member 52 described below is referred to as a housing section 29.

### (Lower guide member)

As illustrated in FIG. 4, the lower guide member 52 is a plate-like member having a predetermined thickness in the X direction. The lower guide member 52 is formed in a rectangular shape whose dimension in the Y direction is longer than its dimension in the Z direction. Two ventilation holes 53 are formed in the lower guide member 52. The two ventilation holes 53 penetrate the lower guide member 52 in the X direction. The ventilation holes 53 are formed in a rectangular shape whose dimension in the Y direction is longer than its dimension in the Z direction. In the lower guide member 52, protrusions 54 are provided on a peripheral portion 52A of the two ventilation holes 53.

The protrusions 54 are portions that can come into contact with notches 114 (FIG. 7) described below. As an example, the protrusions 54 includes first protrusions 55, second protrusions 56, third protrusions 57, and fourth protrusions 58. The first protrusions 55, the second protrusions 56, the third protrusions 57, and the fourth protrusions 58 are formed in a plate-like shape having a predetermined thickness in the Y direction. The first protrusions 55, the second protrusions 56, the third protrusions 57, and the fourth protrusions 58 are positioned in this order from the left side to the right side in the Y direction, and these protrusions are provided, one on the upper side and one on the lower side, respectively. The first protrusions 55 and the third protrusions 57 protrude rearward from the peripheral portion 52A. The second protrusions 56 and the fourth protrusions 58 protrude frontward from the peripheral portion 52A.

The lower guide member 52 is fixed to the lower case 24 by inserting its lower end portion into the insertion portion 27, its right end portion into the insertion portion 39, and its left end portion into the insertion portion 43. The BMS 12 (FIG. 15) is attached to the bottom wall 25 of the housing section 29.

### (Upper case)

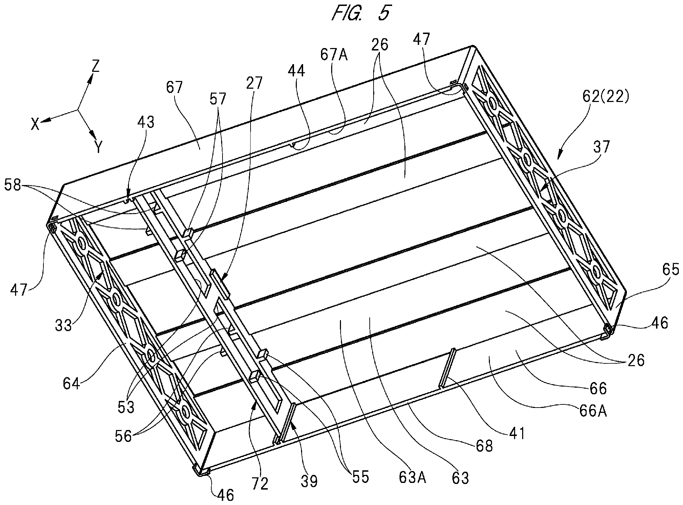

As illustrated in FIG. 5, the upper case 62 partially has the same components as those of the lower case 24 (FIG. 4). For this reason, the same configurations as those of the lower case 24 are denoted by the same reference characters, and the description thereof will be omitted. Note that the lower case 24 and the upper case 62 may have the same configurations or different configurations.

The upper case 62 has an upper wall 63, a front wall 64, a rear wall 65, a right wall 66, and a left wall 67. The upper wall 63 is a plate-like portion having a predetermined thickness in the Z direction, and is formed in a rectangular shape whose dimension in the X direction is longer than its dimension in the Y direction. A lower surface 63A of the upper wall 63 is provided with four flat portions 26. The insertion portion 27 is provided at the center of the lower surface 63A in the Y direction.

The front wall 64 extends downward from the front end portion of the upper wall 63. The front wall 64 has the hole section 33. The rear wall 65 extends downward from the rear end portion of the upper wall 63. The rear wall 65 has the hole section 37. The front wall 64 and the rear wall 65 are an example of a pair of side walls located at an interval in the X direction. The right wall 66 extends downward from the right end portion of the upper wall 63. The insertion portion 39 and the rib 41 are provided on an inner surface 66A of the right wall 66. The left wall 67 extends downward from the left end portion of the upper wall 63. The insertion portion 43 and the rib 44 are provided on an inner surface 67A of the left wall 67. No hole sections are formed in the right wall 66 and the left wall 67.

The lower end positions of the front wall 64, the rear wall 65, the right wall 66, and the left wall 67 are aligned. In other words, the upper case 62 has a lower end surface 68. The lower end surface 68 constitutes the division surface of the case unit 22. At the corners of the upper case 62, two claw portions 46 that protrude toward the lower side beyond the lower end surface 68 and two recessed portions 47 that are recessed toward the upper side beyond the lower end surface 68 are formed. The upper case 62 and the lower case 24 (FIG. 4) become the case unit 22 when the claw portions 46 and the recessed portions 47 that are aligned vertically engage with each other.

### (Upper guide member)

As illustrated in FIG. 5, the upper guide member 72 has the same components as those of the lower guide member 52 (FIG. 4) . For this reason, the same configurations as those of the lower guide member 52 are denoted by the same reference characters, and the description thereof will be omitted.

The upper guide member 72 is a counterpart of the lower guide member 52 rotated 180° around an axis along the X direction, and has the same configuration as the lower guide member 52. Therefore, the first protrusions 55, the second protrusions 56, the third protrusions 57, and the fourth protrusions 58 are positioned in this order from the right side to the left side in the Y direction. The upper guide member 72 is fixed to the upper case 62 by inserting its upper end portion into the insertion portion 27, its right end portion into the insertion portion 39, and its left end portion into the insertion portion 43.

### <Busbar unit>

As illustrated in FIG. 2, the busbar units 76 are provided on the upper side (one end side) and the lower side (the other end side) of the two battery modules 16, respectively. The upper busbar unit 76 and the lower busbar unit 76 are in such an arrangement relationship that they coincide with each other when rotated 180° around a virtual axis (not illustrated) along the X direction.

The busbar unit 76 is made of metal, is electrically conductive, extends in the X direction, and is in contact with the plurality of battery cells S in the Z direction. The upper busbar unit 76 is connected by welding to the terminal portions T1 and the terminal portions T2 (FIG. 3) located on the upper side of the plurality of battery cells S. The lower busbar unit 76, like the upper busbar unit 76, is also connected by welding to the terminal portions T1 and the terminal portions T2 located on the lower side of the plurality of battery cells S. The upper busbar unit 76 and the lower busbar unit 76 are an example of a conductive unit, electrically connect the terminal portions T1 and the terminal portions T2 adjacent in the Y direction, and extend in the X direction.

The upper busbar unit 76 and the lower busbar unit 76 each include three busbars 78. The three busbars 78 are located at intervals in the Y direction and each extend in the X direction. The upper three busbars 78 are an example of a first conductive member. The lower three busbars 78 are an example of a second conductive member.

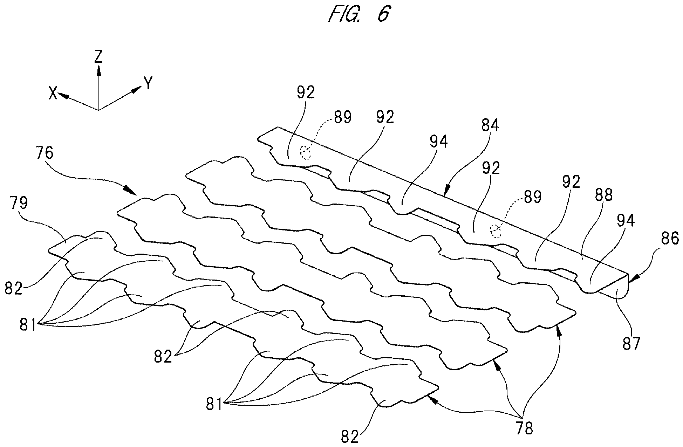

As illustrated in FIG. 6, the busbar 78 is formed in a plate-like shape having a predetermined thickness in the Z direction. As an example, the busbar 78 has a main body portion 79, eight contact portions 81, and four contact portions 82. The main body portion 79 is formed in a rectangular shape whose dimension in the X direction is longer than its dimension in the Y direction. An area of the contact portion 81 is larger than an area of the contact portion 82. The four contact portions 81 and the two contact portions 82 on one side protrude to the right side from the main body portion 79. The four contact portions 81 and the two contact portions 82 on the other side protrude to the left side from the main body portion 79. The eight contact portions 81 and the four contact portions 82 are arranged in a zigzag pattern in the X direction, with their positions in the Y direction shifted alternately.

### <Terminal>

As illustrated in FIG. 2, the terminals 84 are provided on the upper side and the lower side of the two battery modules 16, respectively. The upper terminal 84 and the lower terminal 84 are in such an arrangement relationship that they coincide with each other when rotated 180° around an axis along the X direction.

FIG. 6 illustrates the upper terminal 84. The terminal 84 is made of metal, is electrically conductive, and extends in the X direction. Also, the terminal 84 is a member having an L-shaped cross section on the Y-Z plane. The terminal 84 has a main body portion 86, four contact portions 92, and two contact portions 94. The main body portion 86 has a vertical plate portion 87 along the X-Z plane and a horizontal plate portion 88 extending to the left side from the upper end of the vertical plate portion 87. Through holes 89 for fastening are formed in the vertical plate portion 87. The four contact portions 92 and the two contact portions 94 protrude to the left side from the horizontal plate portion 88.

As illustrated in FIG. 2, the upper and lower terminals 84 are in contact with the plurality of battery cells S in the Z direction. The upper terminal 84 is located on the right side of the rightmost busbar 78 at an interval in the Y direction. Also, the upper terminal 84 is connected by welding to the upper terminal portions T2 (FIG. 3) of the plurality of battery cells S. The lower terminal 84 is located on the left side of the leftmost busbar 78 at an interval in the Y direction. Further, the lower terminal 84 is connected by welding to the lower terminal portions T1 (FIG. 3) of the plurality of battery cells S.

FIG. 7 illustrates the module assembly 14. As an example, the module assembly 14 includes two battery modules 16 and two busbar units 76 and two terminals 84 that extend in the X direction across the two battery modules 16. In other words, the battery modules 16 are additionally installed in the X direction by using the two busbar units 76 and two terminals 84 that extend in the X direction.

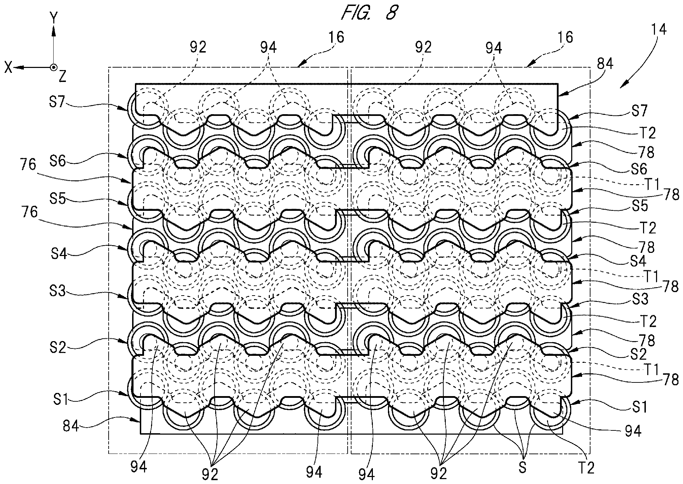

As illustrated in FIG. 8, the three upper busbars 78 and the three lower busbars 78 are positioned so as to be offset in the Y direction by one row of the battery strings S1, S2, S3, S4, S5, S6, and S7. The three upper busbars 78 electrically connect, from the left side to the right side in the Y direction, the terminal portions T2 of the battery string S1 to the terminal portions T1 of the battery string S2, the terminal portions T2 of the battery string S3 to the terminal portions T1 of the battery string S4, and the terminal portions T2 of the battery string S5 to the terminal portions T1 of the battery string S6.

On the other hand, the three lower busbars 78 electrically connect, from the left side to the right side in the Y direction, the terminal portions T2 of the battery string S2 to the terminal portions T1 of the battery string S3, the terminal portions T2 of the battery string S4 to the terminal portions T1 of the battery string S5, and the terminal portions T2 of the battery string S6 to the terminal portions T1 of the battery string S7.

As illustrated in FIG. 7, as an example, the module assembly 14 includes the two cell holders 102 arranged in the X direction. The two cell holders 102 are in contact with each other in the X direction. Hereinafter, the arrangement of each component of the cell holder 102 will be described based on the arrangement in the completed state of the battery module 16.

### <Cell holder>

As illustrated in FIG. 9, the cell holder 102 holds the battery strings S1, S2, S3, S4, S5, S6, and S7. Specifically, the cell holder 102 includes a holding unit 104 and an opening section 105.

### (Holding unit)

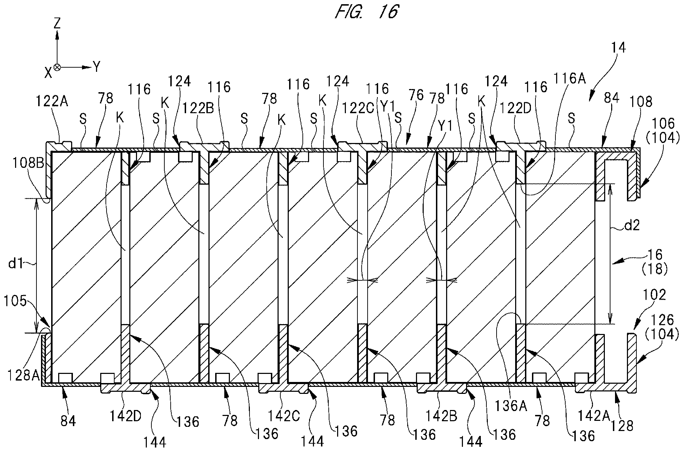

The holding unit 104 holds the battery strings S1, S2, S3, S4, S5, S6, and S7 such that the battery strings S1, S2, S3, S4, S5, S6, and S7 are arranged at intervals Y1 (FIG. 16) in the Y direction. In addition, the holding unit 104 (cell holder 102) holds the battery strings S1, S2, S3, S4, S5, S6, and S7 such that the battery strings S1, S2, S3, S4, S5, S6, and S7 are arranged in a zigzag pattern.

The holding unit 104 includes a first member 106 and a second member 126. The second member 126 is located on the lower side relative to the first member 106. The first member 106 holds one end portions (upper end portions) of the battery strings S1, S2, S3, S4, S5, S6, and S7 in the Z direction. The second member 126 holds the other end portions (lower end portions) of the battery strings S1, S2, S3, S4, S5, S6, and S7 in the Z direction. In this way, the first member 106 and the second member 126 hold both axial end portions of the plurality of battery cells S, thereby arranging the plurality of battery cells S in the X and Y directions.

### <First member>

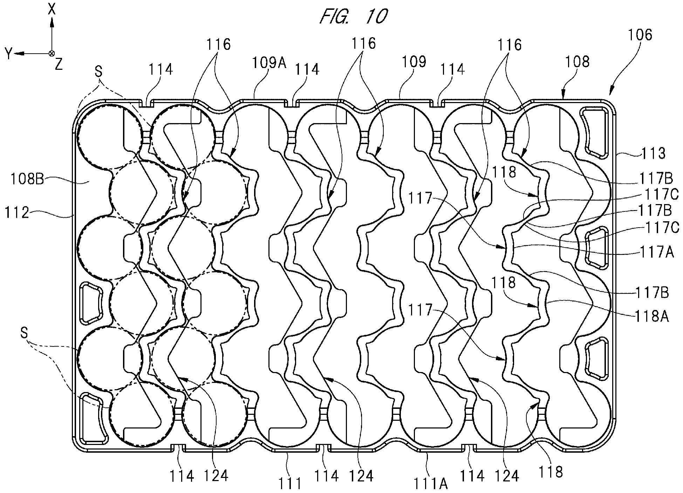

As illustrated in FIG. 10, as an example, the first member 106 includes a first frame portion 108 and six first wall portions 116. Also, the first member 106 is further provided with six notches 114 and three grooves 124. Note that, in FIG. 10, in order to clearly illustrate each portion of the first member 106, only the battery cells S in the two rows on the right side are illustrated by imaginary lines, and the illustration of the remaining battery cells S is omitted.

The first frame portion 108 has a generally rectangular outer shape whose dimension in the Y direction is longer than its dimension in the X direction. The first frame portion 108 surrounds and supports the six first wall portions 116 in the X and Y directions. Specifically, the first frame portion 108 has a front wall 109, a rear wall 111, a right wall 112, and a left wall 113. The first frame portion 108 holds the plurality of battery cells S together with the six first wall portions 116.

The front wall 109 and the rear wall 111 each stand upright in the Z direction and extend in the Y direction. The right wall 112 and the left wall 113 each stand upright in the Z direction and extend in the X direction. Note that an end surface located at the upper end of the first frame portion 108 in the Z direction is referred to as a first surface 108A (FIG. 9), and an end surface located at the lower end thereof is referred to as a second surface 108B. Each of the front wall 109 and the rear wall 111 is provided with three notches 114.

The notch 114 is a portion recessed in the X direction from the front end surface 109A of the front wall 109 or the rear end surface 111A of the rear wall 111. When viewed in the Z direction, the notch 114 has a U-shape. As an example, the notch 114 is aligned in the X direction with the end portion of the first wall portion 116 in the X direction.

The first wall portion 116 extends in the X direction from the rear wall 111 to the front wall 109 inside the first frame portion 108 while meandering to both sides (right side and left side) in the Y direction. A pair of first wall portions 116 adjacent in the Y direction sandwich six battery cells S in the X and Y directions, thereby holding the six battery cells S. The same is true for the other four pairs of first wall portions 116. Note that the battery cells S in the remaining two strings (six cells per string) are held by sandwiching them between the first frame portion 108 and the first wall portions 116 in the X and Y directions.

The first wall portions 116 of each pair hold one end portions (upper end portions) of the six battery cells S in the Z direction. Specifically, the first wall portions 116 hold the plurality of battery cells S such that the plurality of battery cells S is arranged densely in the X direction and arranged at intervals in the Y direction. The first wall portions 116 function as partition walls that partition the arrangement region of the plurality of battery cells S at multiple locations in the Y direction.

When viewed in the Z direction, the first wall portion 116 has a shape in which peak portions 117 protruding toward the right side and valley portions 118 opening toward the right side are arranged alternately in the X direction. The peak portion 117 is an approximately isosceles trapezoidal portion with no bottom base, and is open toward the left side. An upper base portion 117A of the peak portion 117 corresponding to an upper base of the trapezoid has an approximately uniform thickness and is curved. Portions of the peak portion 117 corresponding to the two oblique sides of the trapezoid are referred to as oblique side portions 117B. The thickness at the center of the oblique side portion 117B in the Y direction is smaller than those at both end portions. A curved surface 117C is formed on the oblique side portion 117B so as to be able to come into close contact with the outer circumferential surface of the battery cell S.

The valley portion 118 is an approximately isosceles trapezoidal portion with no bottom base, and is open toward the right side. An upper base portion 118A of the valley portion 118 corresponding to an upper base of the trapezoid has an approximately uniform thickness and is curved. Portions of the valley portion 118 corresponding to the two oblique sides of the trapezoid are the oblique side portions 117B. That is, the oblique side portion 117B is a portion common to the peak portion 117 and the valley portion 118.

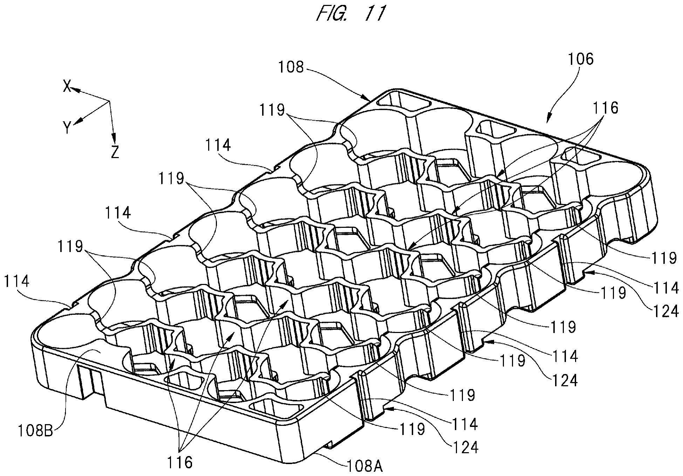

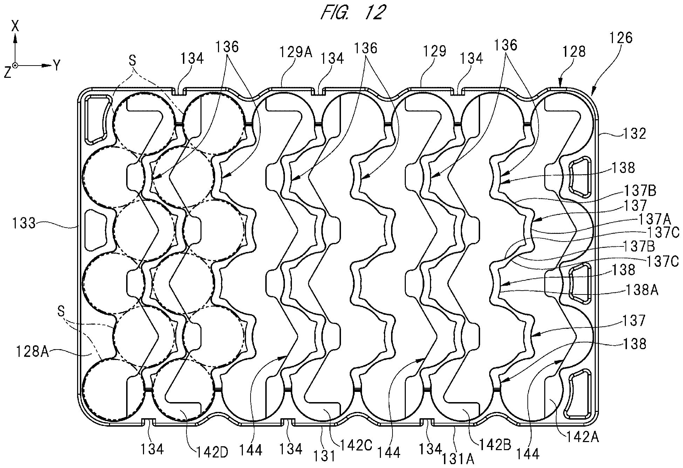

As illustrated in FIG. 11, each of the six first wall portions 116 is recessed relative to the second surface 108B toward the side opposite to second wall portions 136 (FIG. 12) described below (upper side). This forms step portions 119 at the connection portions between the first frame portion 108 and the first wall portions 116.

As illustrated in FIG. 7, as an example, the first member 106 is provided with three grooves 124. Specifically, the first member 106 is provided with edge portions 122A, 122B, 122C, and 122D that protrude upward from the first surface 108A. The edge portions 122A, 122B, 122C, and 122D are located at intervals in the Y direction, and have an approximately triangular wave-like shape extending in the X direction.

The spaces between the edge portion 122A and the edge portion 122B, between the edge portion 122B and the edge portion 122C, and between the edge portion 122C and the edge portion 122D each correspond to the grooves 124. In other words, the groove 124 extends in the X direction while meandering to both sides in the Y direction. The busbar 78 can be fitted into the groove 124. Since the groove 124 has the shape that meanders to both sides in the Y direction, the groove 124 and the busbar 78 can come into contact with each other in the X and Y directions. In other words, the groove 124 can restrict the movement of the busbar 78 in the X and Y directions.

### <Second member>

As illustrated in FIG. 12, as an example, the second member 126 includes a second frame portion 128 and six second wall portions 136. Also, the second member 126 is further provided with six notches 134 and three grooves 144. Note that, in FIG. 12, in order to clearly illustrate each portion of the second member 126, only the battery cells S in the two rows on the right side are illustrated by imaginary lines, and the illustration of the remaining battery cells S is omitted.

The second frame portion 128 has a generally rectangular outer shape whose dimension in the Y direction is longer than its dimension in the X direction. The dimensions of the second frame portion 128 in the X and Y directions are approximately the same as those of the first frame portion 108 (FIG. 10). The second frame portion 128 surrounds and supports the six second wall portions 136 in the X and Y directions. Specifically, the second frame portion 128 has a front wall 129, a rear wall 131, a right wall 132, and a left wall 133. The second frame portion 128 holds the plurality of battery cells S together with the six second wall portions 136.

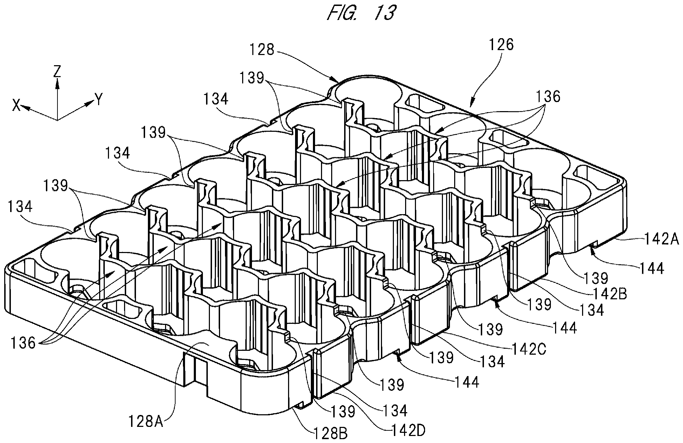

The front wall 129 and the rear wall 131 each stand upright in the Z direction and extend in the Y direction. The right wall 132 and the left wall 133 each stand upright in the Z direction and extend in the X direction. Note that an end surface located at the upper end of the second frame portion 128 in the Z direction is referred to as a first surface 128A, and an end surface located at the lower end thereof is referred to as a second surface 128B (FIG. 13). Each of the front wall 129 and the rear wall 131 is provided with three notches 134.

The notch 134 is a portion recessed in the X direction from the front end surface 129A of the front wall 129 or the rear end surface 131A of the rear wall 131. When viewed in the Z direction, the notch 134 has a U-shape. As an example, the notch 134 is aligned in the X direction with the end portion of the second wall portion 136 in the X direction.

The second wall portion 136 extends in the X direction from the rear wall 131 to the front wall 129 inside the second frame portion 128 while meandering to both sides in the Y direction. A pair of second wall portions 136 adjacent in the Y direction sandwich six battery cells S in the X and Y directions, thereby holding the six battery cells S. The same is true for the other four pairs of second wall portions 136. Note that the battery cells S in the remaining two strings (six cells per string) are held by sandwiching them between the second frame portion 128 and the second wall portions 136 in the X and Y directions.

The second wall portions 136 of each pair hold the other end portions (lower end portions) of the six battery cells S in the Z direction. Specifically, the second wall portions 136 hold the plurality of battery cells S such that the plurality of battery cells S is arranged densely in the X direction and arranged at intervals in the Y direction. The second wall portions 136 function as partition walls that partition the arrangement region of the plurality of battery cells S at multiple locations in the Y direction.

When viewed in the Z direction, the second wall portion 136 has a shape in which peak portions 137 protruding toward the right side and valley portions 138 opening toward the right side are arranged alternately in the X direction. The peak portion 137 is an approximately isosceles trapezoidal portion with no bottom base, and is open toward the left side. An upper base portion 137A of the peak portion 137 corresponding to an upper base of the trapezoid has an approximately uniform thickness and is curved. Portions of the peak portion 137 corresponding to the two oblique sides of the trapezoid are referred to as oblique side portions 137B. The thickness at the center of the oblique side portion 137B in the Y direction is smaller than those at both end portions. A curved surface 137C is formed on the oblique side portion 137B so as to be able to come into close contact with the outer circumferential surface of the battery cell S.

The valley portion 138 is an approximately isosceles trapezoidal portion with no bottom base, and is open toward the right side. An upper base portion 138A of the valley portion 138 corresponding to an upper base of the trapezoid has an approximately uniform thickness and is curved. Portions of the valley portion 138 corresponding to the two oblique sides of the trapezoid are the oblique side portions 137B. That is, the oblique side portion 137B is a portion common to the peak portion 137 and the valley portion 138.

As illustrated in FIG. 13, a portion (upper portion) of each of the six second wall portions 136 protrudes relative to the first surface 128A toward the first wall portion 116 (FIG. 11). This forms a step portion 139 at the connection portion between the second frame portion 128 and the second wall portion 136. Note that the first wall portion 116 and the second wall portion 136 are arranged in the Z direction such that their positions in the X and Y directions are aligned.

As illustrated in FIG. 12 and FIG. 13, as an example, the second member 126 is provided with three grooves 144. Specifically, the second member 126 is provided with edge portions 142A, 142B, 142C, and 142D that protrude downward from the second surface 128B. The edge portions 142A, 142B, 142C, and 142D are located at intervals in the Y direction, and have an approximately triangular wave-like shape extending in the X direction.

The spaces between the edge portion 142A and the edge portion 142B, between the edge portion 142B and the edge portion 142C, and between the edge portion 142C and the edge portion 142D each correspond to the grooves 144. In other words, the groove 144 extends in the X direction while meandering to both sides in the Y direction. The busbar 78 (FIG. 6) can be fitted into the groove 144. Since the groove 144 has the shape that meanders to both sides in the Y direction, the groove 144 and the busbar 78 can come into contact with each other in the X and Y directions. In other words, the groove 144 can restrict the movement of the busbar 78 in the X and Y directions. As described above, the grooves 124 (FIG. 9) and the grooves 144 are provided in the cell holder 102 (FIG. 9).

### (Opening section)

As illustrated in FIG. 9, the opening section 105 is a portion that allows a gas (for example, air) to flow in and outflow in and out between the battery strings S1, S2, S3, S4, S5, S6, and S7 held by the holding unit 104. The opening section 105 is formed by, for example, the second surface 108B of the first member 106 and the first surface 128A of the second member 126. The second surface 108B and the first surface 128A are located at an interval d1 (mm) in the Z direction.

The size of the interval d1 is set such that the outer circumferential surfaces of the plurality of battery cells S are exposed except for the upper and lower end portions including the terminal portions T1 and T2. As described above, in the battery module 16, as an example, the first member 106 and the second member 126 are located at an interval in the Z direction, thereby functioning as the opening section 105.

As illustrated in FIG. 16, in the battery module 16, the central portions of the battery cells S in the Z direction are exposed toward the outside of the battery module 16 through the opening section 105. Furthermore, in the battery module 16, the upper portions of the plurality of battery cells S are held by the first wall portion 116. The lower portions of the plurality of battery cells S are held by the second wall portion 136. Here, the surface located at the lower end of the first wall portion 116 in the Z direction is referred to as a first end surface 116A. In addition, the surface located at the upper end of the second wall portion 136 in the Z direction is referred to as a second end surface 136A.

The first end surface 116A and the second end surface 136A are located at an interval d2 (mm) in the Z direction. In other words, the first wall portion 116 and the second wall portion 136 are located at an interval d2 in the Z direction. In this way, flow paths K through which a gas (for example, air) can flow are formed between the battery cells S adjacent in the Y direction. Note that, in FIG. 16, as an example, the size of the interval d1 and the size of the interval d2 are approximately the same, but the intervals d1 and d2 may be the same or different from each other.

### <Assembling battery pack>

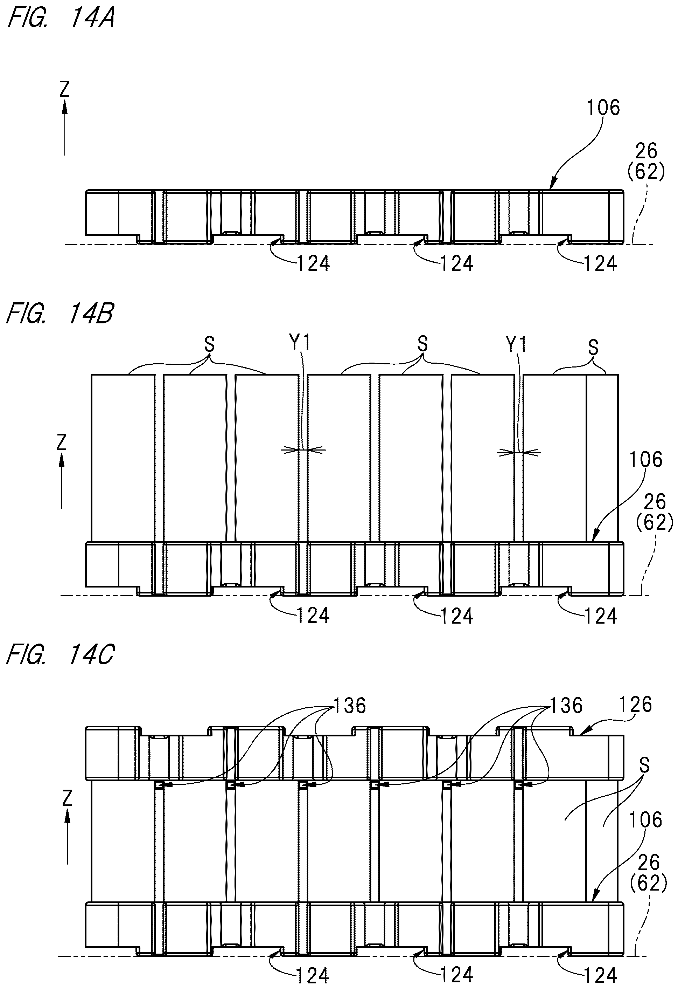

As illustrated in FIG. 14A, the upper case 62 is placed upside down on a workbench (not illustrated). The two first members 106 are placed on the flat portion 26 of the upper case 62 with the grooves 124 facing downward. Note that FIG. 14A illustrates the first member 106 on the rear side, and the illustration of the first member 106 on the front side is omitted. The first member 106 is positioned to the upper case 62 by inserting the first protrusions 55 and the third protrusions 57 (FIG. 4) into the respective notches 114 (FIG. 7).

As illustrated in FIG. 14B, the plurality of battery cells S is arranged on the first member 106. At this time, the lower portions of the plurality of battery cells S are held by the plurality of first wall portions 116 (FIG. 11), whereby the plurality of battery cells S stands upright in the Z direction. In this way, the plurality of battery cells S is made to stand upright in the Z direction and is arranged in the X and Y directions by the first member 106. In other words, the battery strings S1, S2, S3, S4, S5, S6, and S7 (FIG. 3) are located at intervals Y1 in the Y direction. When the battery cells S are arranged over the entire two first members 106, the total number of battery cells S is 84 (7×6×2=84).

As illustrated in FIG. 14C, the second member 126 is attached from above to the upper portions of the plurality of battery cells S, thereby completing the battery module 16 (FIG. 9). At this time, the upper portions of the plurality of battery cells S come into contact with portions (lower portions) of the second wall portions 136 protruding downward, thereby being guided between the plurality of second wall portions 136. In this way, it is possible to easily attach the second member 126 to the plurality of battery cells S.

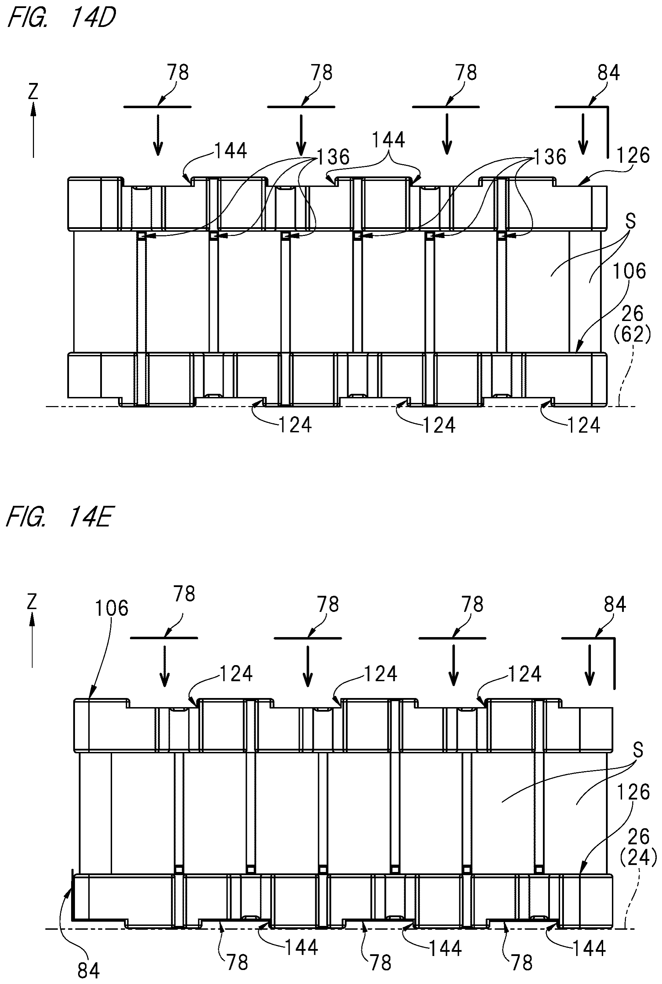

As illustrated in FIG. 14D, the three busbars 78 and the terminal 84 are placed on the second member 126. At this time, the busbars 78 are fitted into the grooves 144 and come into contact with one end portions of the plurality of battery cells S. The terminal 84 is supported by the second member 126 and comes into contact with one end portions of the plurality of battery cells S. Then, the three busbars 78 and the terminal 84 are welded to the one end portions of the plurality of battery cells S.

Furthermore, the second member 126 is covered from above by the lower case 24 (FIG. 4) and comes into contact with the lower case 24. At this time, the second member 126 is positioned to the lower case 24 by inserting the first protrusions 55 and the third protrusions 57 (FIG. 4) into the respective notches 134 (FIG. 12). After the second member 126 is housed in the lower case 24, the entire assembly is turned upside down such that the lower case 24 is located on the lower side and the upper case 62 is located on the upper side. Then, the upper case 62 is removed.

As illustrated in FIG. 14E, the three busbars 78 and the terminal 84 are placed on the first member 106. At this time, the busbars 78 are fitted into the grooves 124 and come into contact with the other end portions of the plurality of battery cells S. The terminal 84 is supported by the first member 106 and comes into contact with the other end portions of the plurality of battery cells S. Then, the three busbars 78 and the terminal 84 are welded to the other end portions of the plurality of battery cells S.

As illustrated in FIG. 15, after the plurality of battery cells S is welded, the BMS 12, wirings, and others are attached to the housing section 29 between the front wall 32 and the guide unit 51.

As illustrated in FIG. 2, the first member 106 is covered from above by the upper case 62 and comes into contact with the upper case 62. At this time, the first member 106 is positioned to the upper case 62 by inserting the first protrusions 55 and the third protrusions 57 into the respective notches 114 (FIG. 15). In this state, the claw portions 46 and the recessed portions 47 (FIG. 4 and FIG. 5) engage with each other, whereby the upper case 62 and the lower case 24 are united and the battery pack 10 is completed.

### [Function of battery pack]

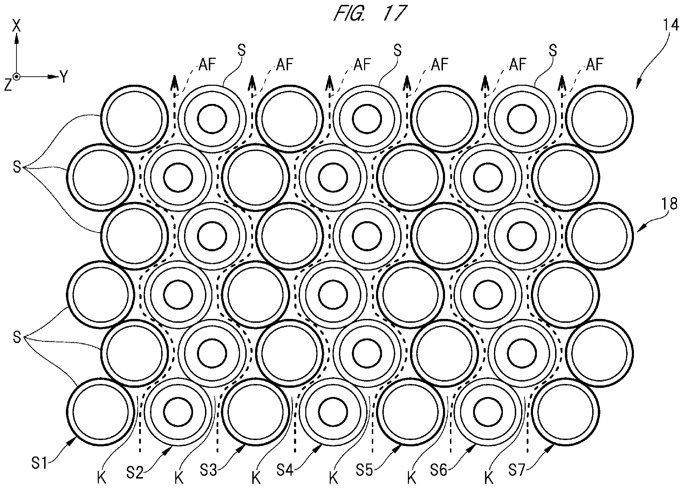

As illustrated in FIG. 17, in the battery module 16, the plurality of battery cells S is densely arranged in the X direction, making it difficult for the air AF to flow in the Y direction. On the other hand, the plurality of flow paths K extends in the X direction while meandering to both sides in the Y direction, making it easier for the air AF to flow in the X direction around the plurality of battery cells S. This makes it possible to promote heat dissipation from the plurality of battery cells S while increasing the arrangement density of the plurality of battery cells S in the battery module 16 (FIG. 9).

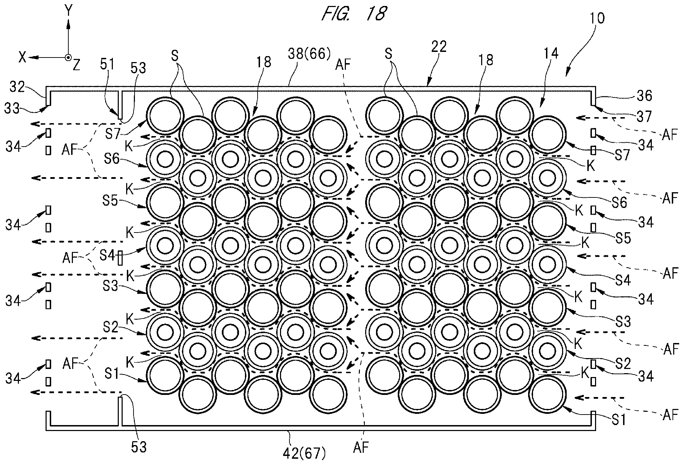

FIG. 18 schematically illustrates the state of the battery pack 10 in which the air AF flows into the case unit 22 through the hole section 37 in the rear wall 36 and flows out through the hole section 33 in the front wall 32. The air AF that has flown into the case unit 22 flows through the plurality of flow paths K, thereby cooling the plurality of battery cells S of the two cell groups 18. The air AF that has flown through the inside of the two cell groups 18 (flow paths K) passes through the ventilation hole 53 and flows out through the hole section 33 in the front wall 32.

Note that no hole sections are formed in the right walls 38 and 66 and the left walls 42 and 67 of the case unit 22. This makes it possible to prevent the air AF that has flown into the case unit 22 through the hole section 37 from immediately flowing out to the outside from the right walls 38 and 66 and the left walls 42 and 67. The flow of the air AF may be either a forced flow or a natural flow. In other words, the flow of the air AF may be either a forced flow generated by using a blower such as a fan or a natural flow generated by a temperature difference.

Hereinafter, the functions of the battery pack 10, the battery module 16, and the cell holder 102 according to the first embodiment will be summarized. Note that reference will be made to FIG. 1 to FIG. 18 and individual figure numbers will be omitted.

When the battery strings S1, S2, S3, S4, S5, S6, and S7 are held by the cell holder 102, the battery strings S1, S2, S3, S4, S5, S6, and S7 are arranged in the Y direction at the intervals Y1. This forms the flow paths K extending in the X direction between the battery strings S1, S2, S3, S4, S5, S6, and S7. By allowing a gas such as the air AF to flow through the flow paths K, heat dissipation from the plurality of battery cells S can be promoted.

In the cell holder 102 (battery pack 10), the holding unit 104 holds the battery strings S1, S2, S3, S4, S5, S6, and S7 in which six battery cells S are arranged in a zigzag pattern. This forms the flow paths K that extend in the X direction while meandering to both sides (right and left sides) in the Y direction, so that the contact area between the gas and the plurality of battery cells S is increased as compared to the case in which straight flow paths K are formed. Furthermore, since the flow paths K meander, the turbulence of the gas is likely to occur in the flow paths K, making it possible to further promote heat dissipation from the plurality of battery cells S.

In addition, the first wall portions 116 and the second wall portions 136 extend in the X direction while meandering to both sides in the Y direction. This makes it possible to form the plurality of flow paths K between the plurality of battery cells S and densely arrange the plurality of battery cells S in the X direction. Here, the direction in which the gas flows is the X direction. Therefore, the flow paths K can be ensured even when the plurality of cell holders 102 is arranged in the X direction. In other words, it is possible to promote heat dissipation from the plurality of battery cells S while ensuring the expandability of the cell holder 102 in the X direction.

In the cell holder 102, the first member 106 and the second member 126 are located at the interval d1 in the Z direction, thereby functioning as the opening section 105. Therefore, portions of the plurality of battery cells S located on the outermost side in the two cell groups 18 are exposed. This allows the gas to flow in and out between the battery strings S1, S2, S3, S4, S5, S6, and S7 held in the holding unit 104, and promotes heat dissipation from the battery cells S located on the outermost side in the X and Y directions.

In the cell holder 102, portions of the second wall portions 136 of the second member 126 protrude beyond the first surface 128A toward the first wall portions 116. Here, when the second member 126 is attached to the upper portions of the plurality of battery cells S, the upper portions of the plurality of battery cells S come into contact with the protruding portions of the second wall portions 136, thereby being guided between the plurality of second wall portions 136. This makes it easier to attach the second member 126 to the plurality of battery cells S, so that the cell holder 102 can be easily attached to the plurality of battery cells S.

In the cell holder 102, the first wall portions 116 of the first member 106 are recessed beyond the second surface 108B toward the side opposite to the second wall portions 136. Here, when the plurality of battery cells S is to be held by the cell holder 102, the first member 106 is placed on the lower side and the plurality of battery cells S is placed on it, whereby the plurality of battery cells S is housed between the plurality of first wall portions 116 due to the action of gravity. As described above, since it is possible to hold the plurality of battery cells S even though the first wall portions 116 are recessed, it is possible to make the cell holder 102 lighter.

In the battery module 16, the terminal portions T1 and T2 of all the battery cells S are arranged in the X direction, with the polarity of the terminal portions T1 or T2 of one battery string being different from the polarity of the terminal portions T1 or T2 of the other battery string adjacent in the Y direction. Therefore, all the battery cells S can be connected in series and in parallel by the plurality of busbars 78 that has a width capable of connecting to the terminal portions T1 and T2 of adjacent battery strings and extends in the X direction. Since the number of parallel connections can be increased by arranging the same battery modules 16 in the X direction and electrically connecting them by extending the busbars 78 in the X direction, the additional battery modules 16 can be easily installed.

As a specific example, 42 battery cells S (6 cells in parallel × 7 cells in series) are defined as one module (one unit), and n battery modules 16 (n is a natural number) can be arranged in the X direction. More specifically, as the arrangement of the plurality of battery cells S, it is possible to arrange 7 cells in series and 6n cells in parallel (as an example, 7 cells in series × 12 cells in parallel). Furthermore, by extending the busbar unit 76 in the X direction, the n battery modules 16 can be connected by the common busbar unit 76. In this way, the battery pack 10 including n battery modules 16 can be easily made.

In addition to the above-mentioned functions of the cell holder 102, the battery pack 10 includes the case unit 22, so that a gas such as the air AF that has flown into the case unit 22 through the hole section 37 does not immediately flow out of the case unit 22, but flows out through the hole section 33. This makes it possible to promote heat dissipation from the plurality of battery cells S in the battery pack 10.

In the battery pack 10, the plurality of battery cells S is arranged in each of the battery strings S1, S2, S3, S4, S5, S6, and S7, with the polarity of the terminal portions T1 or T2 aligned. Furthermore, the polarities of the terminals T1 and T2 of the battery strings S1, S2, S3, S4, S5, S6, and S7 alternately differ in the Y direction. In addition, the busbar unit 76 electrically connects the plurality of terminal portions T1 and T2 adjacent in the Y direction and extends in the X direction. This makes it possible to electrically connect the plurality of battery cells S in series in the Y direction and in parallel in the X direction, and reduce the number of busbars 78 required to connect the plurality of battery cells S.

In the battery pack 10, as an example, two battery modules 16 are arranged in the X direction. The busbar unit 76 has three busbars 78 on each of the upper and lower sides. The upper busbars 78 electrically connect the plurality of terminal portions T1 and T2 located on the upper side. The lower busbars 78 electrically connect the plurality of terminal portions T1 and T2 located on the lower side. Furthermore, the upper busbars 78 and the lower busbars 78 are positioned so as to be offset in the Y direction by one row of the battery string.

Here, the polarity of the terminal portions T1 or T2 of each of the battery strings S1, S2, S3, S4, S5, S6, and S7 is aligned in the X direction. Also, the polarities of the terminal portions T1 and T2 alternately differ in the Y direction. Thus, since the upper busbars 78 and the lower busbars 78 are positioned so as to be offset in the Y direction by one row, the plurality of battery cells S can be connected in series in the Y direction. Then, by extending the upper and lower busbars 78 in the X direction, the number of battery cells S connected in parallel in the X direction can be increased while keeping the number of battery cells S connected in series in the Y direction constant. In other words, the additional battery modules 16 can be easily installed in the X direction.

In the battery pack 10, the busbars 78 are fitted into the respective grooves 124 and 144, so that the movement of each busbar 78 in the X and Y directions is restricted. This makes it possible to prevent the busbars 78 from shifting out of position when the busbars 78 are welded to the plurality of battery cells S.

In the battery pack 10, the guide unit 51 positions the cell holder 102 in the X and Y directions. Therefore, even if the case unit 22 is turned upside down when assembling the battery pack 10, it is possible to prevent the cell holder 102 from shifting out of position in the X or Y direction.

In the battery pack 10, the cell holder 102 is positioned by the engagement of the protrusions 54 and the notches 114. Here, the ventilation holes 53 are formed in the upper guide member 72 and the lower guide member 52 on which the protrusions 54 are provided. Therefore, since the flow of a gas such as the air AF is less likely to be restricted by the upper guide member 72 and the lower guide member 52, the gas can flow to the downstream side relative to the upper guide member 72 and the lower guide member 52, while keeping the cell holder 102 positioned.

In the battery pack 10, a common member may be used for the first member 106 and the second member 126. In other words, the holding unit 104 may be made up of two identical members. In this case, since the members constituting the battery pack 10 are made common in the upper and lower sides, the types of components (number of components) can be reduced. Specifically, the cell holders 102, the case unit 22, the busbars 78, and the terminals 84 are made common by eliminating the distinction between the upper and lower sides. Note that, when the members are made common, the appearance of the battery pack 10 remains the same even if the battery pack 10 is turned upside down.

### [Second embodiment]

A battery pack 150 according to the second embodiment will be described in detail with reference to the drawings.

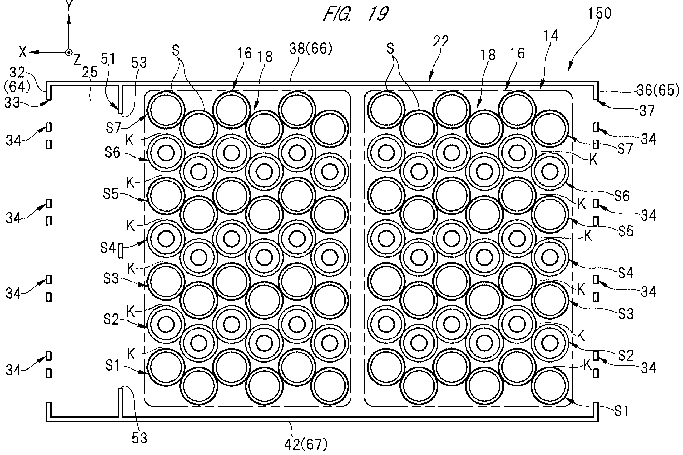

FIG. 19 illustrates the members of the battery pack 150 according to the second embodiment. The battery pack 150 differs from the battery pack 10 (FIG. 18) only in the setting of each interval described below. In other words, the battery pack 150 has the same configuration as the battery pack 10, except for the difference in the interval between members. For this reason, the case unit 22 and the battery module 16 of the battery pack 150 will be described, and descriptions of the other configurations will be omitted.

The battery pack 150 includes the case unit 22 and two battery modules 16. The case unit 22 has the bottom wall 25, the front walls 32 and 64, the rear walls 36 and 65, the right walls 38 and 66, the left walls 42 and 67, and the upper wall 63 (FIG. 5) .

The right walls 38 and 66 and the left walls 42 and 67 are an example of a pair of other side walls located at an interval in the Y direction. The right walls 38 and 66 and the left walls 42 and 67 are located on the outer sides (right side and left side) relative to the two battery modules 16 in the Y direction. In addition, the right walls 38 and 66 and the left walls 42 and 67 face the two battery modules 16 in the Y direction.

The portions located at both end portions of the case unit 22 in the Y direction and formed by the bottom wall 25, the upper wall 63 (FIG. 5), the front walls 32 and 64, and the rear walls 36 and 65 are referred to as virtual openings. Here, the right walls 38 and 66 and the left walls 42 and 67 cover the virtual openings in the Y direction. In other words, the right walls 38 and 66 and the left walls 42 and 67 are blocked, preventing the air from flowing out of the case unit 22 in the Y direction.

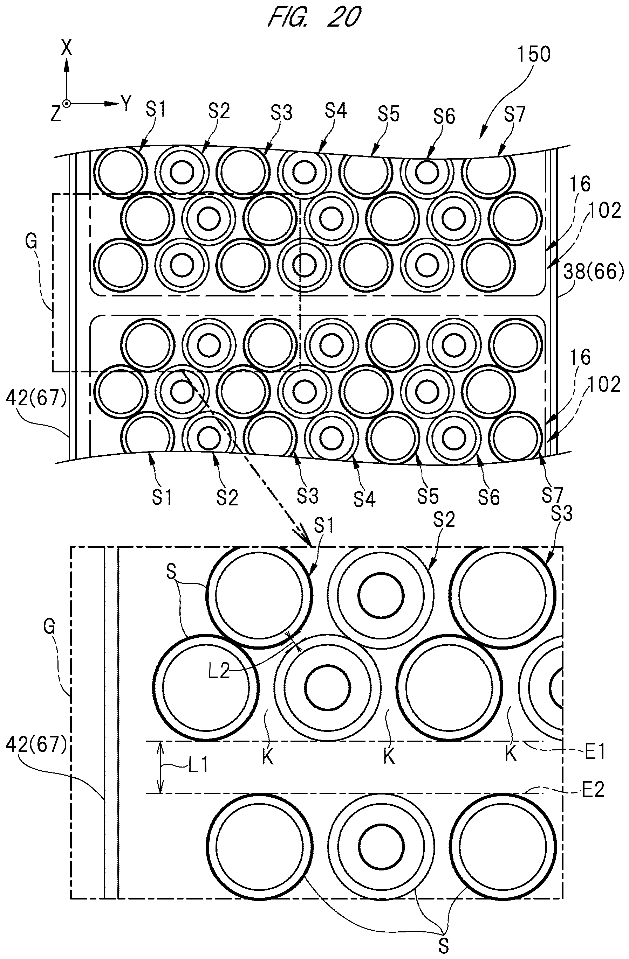

As illustrated in FIG. 20, each of the two battery modules 16 includes the battery strings S1, S2, S3, S4, S5, S6, and S7 and the cell holder 102. The two battery modules 16 are arranged at a first interval L1 in the X direction.

In the battery module 16 on the front side in the X direction, a common tangent on the rear side of the plurality of battery cells S located at the rear end is referred to as a common tangent E1. The common tangent E1 extends along the Y direction. In the battery module 16 on the rear side in the X direction, a common tangent on the front side of the plurality of battery cells S located at the front end is referred to as a common tangent E2. The common tangent E2 extends along the Y direction. The first interval L1 is the distance in the X direction between the common tangent E1 and the common tangent E2. In other words, the first interval L1 corresponds to the distance between the battery module 16 on the front side and the battery module 16 on the rear side.

The battery strings S1, S2, S3, S4, S5, S6, and S7 are located at intervals in the Y direction. As an example, description will be made focusing on the battery strings S1 and S2. Of the intervals between the battery cells S of the battery string S1 and the battery cells S of the battery string S2, the smallest interval is referred to as a second interval L2. The second interval L2 is the interval between the battery cells S in a direction intersecting both the X and Y directions when viewed in the Z direction. As an example, the second interval L2 is narrower than the first interval L1.

### [Function of battery pack]

As illustrated in FIG. 20, in the battery pack 150, the second interval L2 which is the distance between cells is narrower than the first interval L1 which is the distance between modules. In other words, the second interval L2 is narrower than the first interval L1, making it difficult for air to pass through the flow paths K between the battery cells S.

On the other hand, air flows easily between the two battery modules 16 because the opening is large and the pressure is low. In other words, air flows easily in the Y direction from between the two battery modules 16. Here, the right walls 38 and 66 and the left walls 42 and 67 are provided on the outer sides relative to the two battery modules 16 in the Y direction. For this reason, air flows outward in the Y direction from between the two battery modules 16, but the right walls 38 and 66 and the left walls 42 and 67 restrict the movement of air in the Y direction. As a result, air flows between the battery module 16 and the right walls 38 and 66 or between the battery module 16 and the left walls 42 and 67.

As described above, in the battery pack 150, the second interval L2 is narrower than the first interval L1, so that air is less likely to flow through the plurality of flow paths K. However, since air flows between the battery module 16 and the right walls 38 and 66 or between the battery module 16 and the left walls 42 and 67, it is possible to cool the two battery modules 16 from the outside. This makes it possible to promote heat dissipation from the plurality of battery cells S.

### [Third embodiment]

A battery pack 160 according to the third embodiment will be described in detail with reference to the drawings.

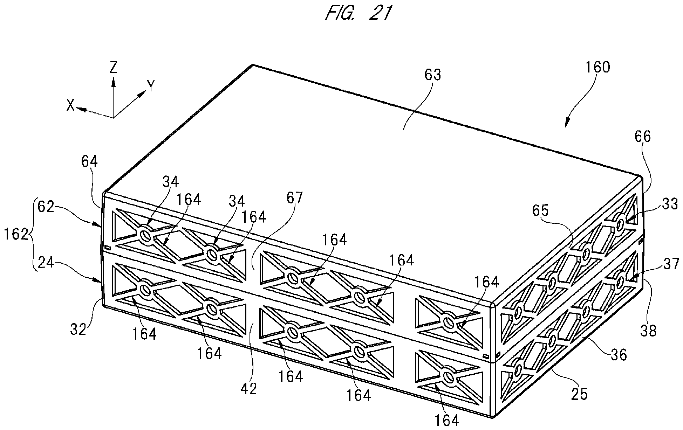

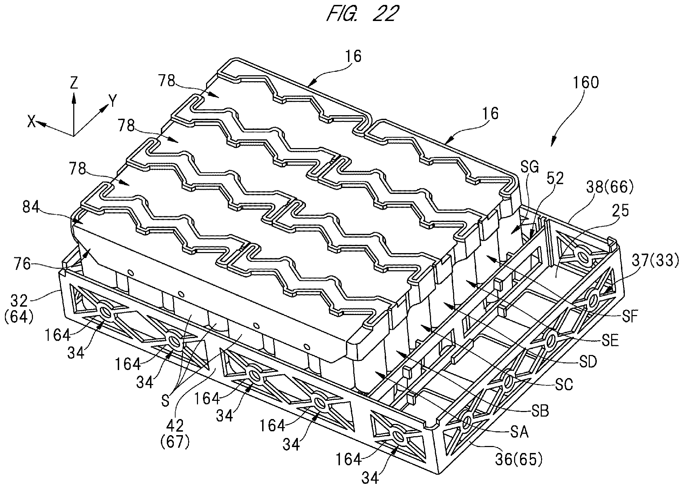

As illustrated in FIG. 21, the battery pack 160 according to the third embodiment differs from the battery pack 10 (FIG. 1) according to the first embodiment in the setting of each interval described below and in the provision of a plurality of hole sections 164. In other words, the battery pack 160 has the same configuration as the battery pack 10, except for the difference in the interval between members and the provision of the plurality of hole sections 164. For this reason, a case unit 162 and the battery module 16 (FIG. 22) of the battery pack 160 will be described, and descriptions of the other configurations will be omitted.

The battery pack 160 includes the case unit 162 and the two battery modules 16 (FIG. 22). The case unit 162 has the bottom wall 25, the front walls 32 and 64, the rear walls 36 and 65, the right walls 38 and 66, the left walls 42 and 67, and the upper wall 63.

The right walls 38 and 66 and the left walls 42 and 67 illustrated in FIG. 22 are an example of a pair of other side walls. The right walls 38 and 66 and the left walls 42 and 67 are located on the outer sides (right side and left side) relative to the two battery modules 16 in the Y direction. In addition, the right walls 38 and 66 and the left walls 42 and 67 face the two battery modules 16 in the Y direction. Furthermore, the plurality of hole sections 164 is formed in the right walls 38 and 66 and the left walls 42 and 67. The plurality of hole sections 164 is an example of other hole sections.

The plurality of hole sections 164 is open toward the two battery modules 16. As the plurality of hole sections 164, for example, five hole sections are provided in each of the right walls 38 and 66 and each of the left walls 42 and 67. The five hole sections 164 are arranged in the X direction. The plurality of hole sections 164 penetrates each of the right walls 38 and 66 and the left walls 42 and 67 in the Y direction. The hole section 164 is made up of a plurality of through holes partitioned by the partitions 34.

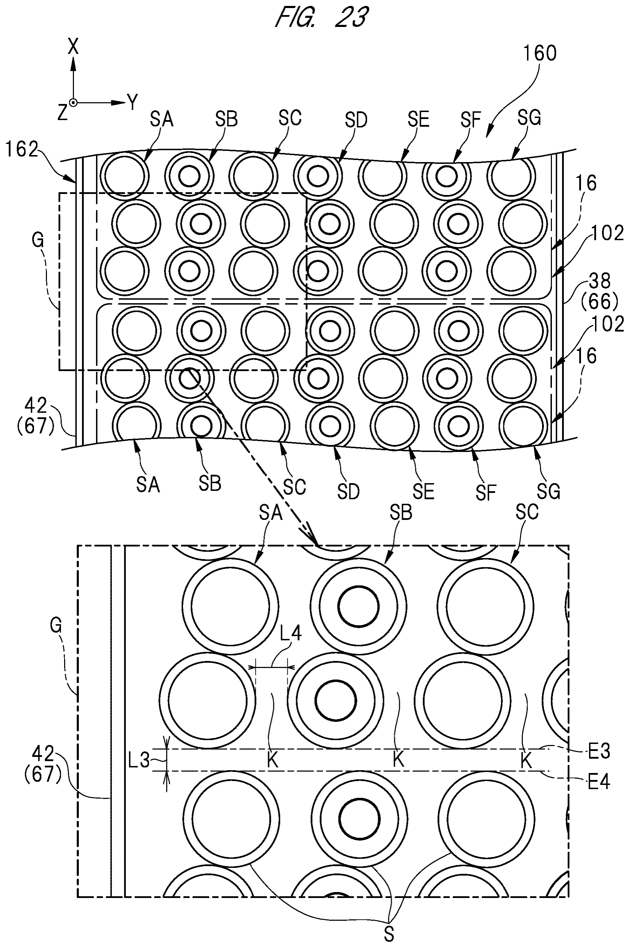

As illustrated in FIG. 23, each of the two battery modules 16 includes battery strings SA, SB, SC, SD, SE, SF, and SG and the cell holder 102. The two battery modules 16 are arranged at a first interval L3 in the X direction. Note that the battery strings SA, SB, SC, SD, SE, SF, and SG are denoted by different reference characters because the arrangement of the plurality of battery cells S is different from that of the battery strings S1, S2, S3, S4, S5, S6, and S7 (FIG. 20). As an example, in the battery strings SA, SB, SC, SD, SE, SF, and SG, six battery cells S are arranged in a zigzag pattern in the X direction, with their positions in the Y direction shifted alternately.

In the battery module 16 on the front side in the X direction, a common tangent on the rear side of the plurality of battery cells S located at the rear end is referred to as a common tangent E3. The common tangent E3 extends along the Y direction. In the battery module 16 on the rear side in the X direction, a common tangent on the front side of the plurality of battery cells S located at the front end is referred to as a common tangent E4. The common tangent E4 extends along the Y direction. The first interval L3 is the distance in the X direction between the common tangent E3 and the common tangent E4. In other words, the first interval L3 corresponds to the distance between the battery module 16 on the front side and the battery module 16 on the rear side.

The battery strings SA, SB, SC, SD, SE, SF, and SG are located at intervals in the Y direction. As an example, description will be made focusing on the battery strings SA and SB. Of the intervals between the battery cells S of the battery string SA and the battery cells S of the battery string SB, the smallest interval is referred to as a second interval L4. As an example, the second interval L4 is the interval between the battery cells S in the Y direction. The second interval L4 is wider than the first interval L3. In this way, the battery strings SA, SB, SC, SD, SE, SF, and SG are located at the second intervals L4 equal to or larger than the first interval L3 in the Y direction.

### [Function of battery pack]

As illustrated in FIG. 23, in the battery pack 160, the second interval L4 which is the distance between cells is wider than the first interval L3 which is the distance between modules. In other words, the second interval L4 is wider than the first interval L3, making it easier for air to pass through the flow paths K between the battery cells S.

On the other hand, air does not flow easily between the two battery modules 16 because the opening is small and the pressure is high. In other words, air can easily flow from between the two battery modules 16 into each flow path K. Therefore, portions of the battery cells S facing the flow paths K are cooled by the air flow.

For the reasons mentioned above, air is less likely to flow between the two battery modules 16 and the right walls 38 and 66 and between the two battery modules 16 and the left walls 42 and 67. Here, the plurality of hole sections 164 (FIG. 22) is formed in the right walls 38 and 66 and the left walls 42 and 67. This allows air to flow in and out between the two battery modules 16 and the right walls 38 and 66 and between the two battery modules 16 and the left walls 42 and 67. In this way, it is possible to cool not only the portions of the battery cells S facing the flow paths K, but also the portions facing the right walls 38 and 66 and the left walls 42 and 67.

As described above, in the battery pack 160, the second interval L4 is wider than the first interval L3, so that air can easily flow through the plurality of flow paths K. Furthermore, the provision of the plurality of hole sections 164 (FIG. 22) allows air to flow in and out between the battery module 16 and the right walls 38 and 66 and between the battery module 16 and the left walls 42 and 67. This makes it possible to promote heat dissipation from the plurality of battery cells S.

### [Fourth embodiment]

The fourth embodiment will be described in detail with reference to the drawings.

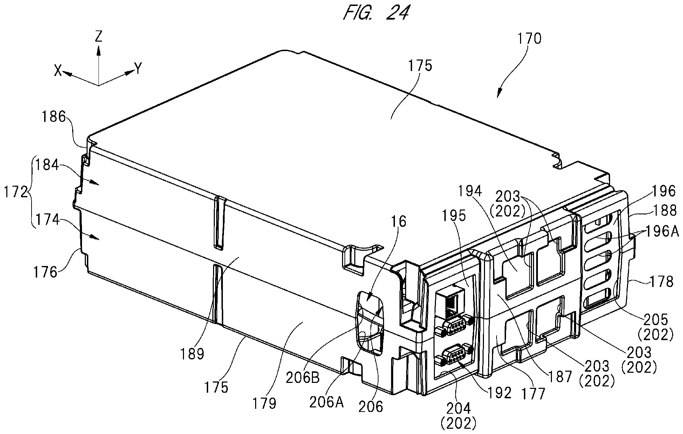

FIG. 24 illustrates a battery pack 170 according to the fourth embodiment. Note that the same or substantially same configurations and elements as those in the battery pack 10 (FIG. 1) are denoted by the same reference characters, and repetitive descriptions will be omitted.

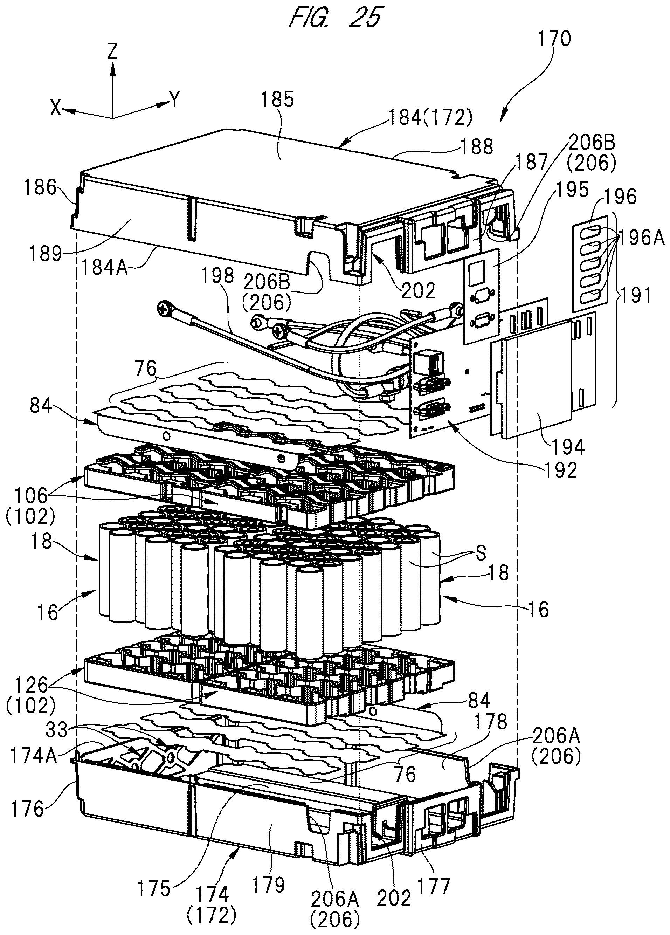

As illustrated in FIG. 25, as an example, the battery pack 170 includes the two cell groups 18, a case unit 172, the two busbar units 76, the two terminals 84, and the two cell holders 102. In other words, the battery pack 170 includes the case unit 172 and the two battery modules 16. Furthermore, the battery pack 170 includes a battery management unit (BMU) 192, a heat sink 194, plates 195 and 196, and a wire harness 198. Note that, in the battery module 16, the second interval L2 (FIG. 20) is narrower than the first interval L1 (FIG. 20).

The BMU 192 controls the charging and discharging of the two battery modules 16. The heat sink 194 is attached to the BMU 192 and dissipates heat from the BMU 192. The plates 195 and 196 are attached to the case unit 172. The BMU 192 and the heat sink 194 are fixed to the plates 195 and 196. The wire harness 198 electrically connects the BMU 192 to the two terminals 84. Note that the BMU 192, the heat sink 194, and the plates 195 and 196 are collectively referred to as a housing member 191.

The housing member 191 is located inside the case unit 172. Specifically, the housing member 191 is located between rear walls 177 and 187 and the battery module 16 on the rear side. Furthermore, the housing member 191 faces a hole section 202 described below in the X direction.

The case unit 172 is divided into upper and lower portions, and includes a lower case 174 and an upper case 182. As described above, the case unit 172 houses the two battery modules 16, the two busbar units 76, and the two terminals 84. In addition, the case unit 172 houses the BMU 192, the heat sink 194, the plates 195 and 196, and the wire harness 198. An attachment plug or connector (not illustrated) can be attached to the case unit 172. A plurality of slits 196A arranged at intervals in the Z direction is formed in the plate 196.

The lower case 174 has a bottom wall 175, a front wall 176, a rear wall 177, a right wall 178, and a left wall 179. The bottom wall 175 is a plate-like portion having a predetermined thickness in the Z direction, and is formed in a rectangular shape whose dimension in the X direction is longer than its dimension in the Y direction. The front wall 176 stands upright toward the upper side from the front end portion of the bottom wall 175. The rear wall 177 stands upright toward the upper side from the rear end portion of the bottom wall 175. The right wall 178 stands upright toward the upper side from the right end portion of the bottom wall 175. The left wall 179 stands upright toward the upper side from the left end portion of the bottom wall 175.

The upper end positions of the front wall 176, the rear wall 177, the right wall 178, and the left wall 179 are aligned. In other words, the lower case 174 has an upper end surface 174A. The upper end surface 174A constitutes the division surface of the case unit 172 in the vertical direction.

The upper case 184 has an upper wall 185, a front wall 186, a rear wall 187, a right wall 188, and a left wall 189. The upper wall 185 is a plate-like portion having a predetermined thickness in the Z direction, and is formed in a rectangular shape whose dimension in the X direction is longer than its dimension in the Y direction. The front wall 186 extends downward from the front end portion of the upper wall 185. The rear wall 187 extends downward from the rear end portion of the upper wall 185. The right wall 188 extends downward from the right end portion of the upper wall 185. The left wall 189 extends downward from the left end portion of the upper wall 185.

The bottom end positions of the front wall 186, the rear wall 187, the right wall 188, and the left wall 189 are aligned. In other words, the upper case 184 has a lower end surface 184A. The lower end surface 184A constitutes the division surface of the case unit 172 in the vertical direction together with the upper end surface 174A. The lower case 174 and the upper case 184 become the case unit 172 when the claw portions and recessed portions (not illustrated) engage with each other.

The front walls 176 and 186 and the rear walls 177 and 187 are an example of a pair of side walls located at an interval in the X direction. The front walls 176 and 186 have the plurality of hole sections 33. The rear walls 177 and 187 are an example of one of a pair of side walls. The right walls 178 and 188 and the left walls 179 and 189 are an example of a pair of other side walls. The right walls 178 and 188 and the left walls 179 and 189 are located outside the two battery modules 16 in the Y direction.

As illustrated in FIG. 24, the rear walls 177 and 187 have the hole section 202. The hole section 202 penetrates the rear walls 177 and 187 in the X direction. In other words, the hole section 202 is open in the X direction. As an example, the hole section 202 includes first through holes 203 and second through holes 204 and 205. Note that the hole section 202 is closed by the housing member 191 (FIG. 25). In other words, the rear walls 177 and 187 are blocked.

A total of four first through holes 203 are provided at the center of the rear walls 177 and 187 in the Y direction. The first through holes 203 expose the rear surface of the heat sink 194 to the rear side. The second through hole 204 is located on the left side of the first through holes 203. The second through hole 204 exposes the connector portion of the BMU 192 and the rear surface of the plate 195 to the rear side. The second through hole 205 is located on the right side of the first through holes 203. The second through hole 205 exposes a portion of the heat sink 194 and the rear surface of the plate 196 to the rear side.

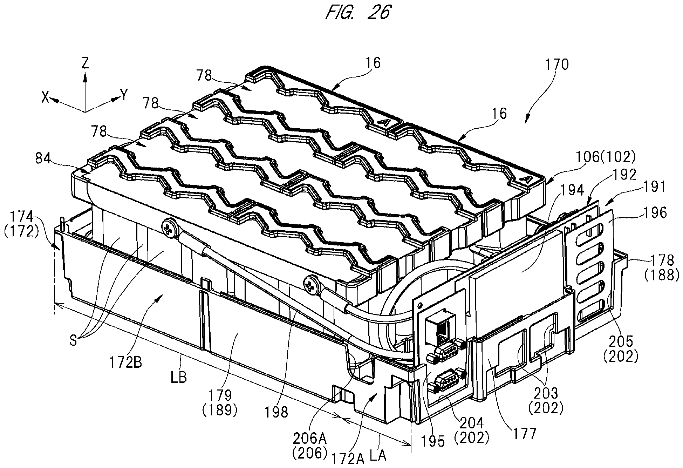

As illustrated in FIG. 26, the portion of the case unit 172 that houses the housing member 191 is referred to as a BMU housing section 172A, and the portion that houses the two battery modules 16 is referred to as a module housing section 172B. The length of the BMU housing section 172A in the X direction is LA, and the length of the module housing section 172B in the X direction is LB. As an example, the boundary position in the X direction between the BMU housing section 172A and the module housing section 172B is set at the rear end position of the cell holder 102 in the X direction.

The right walls 178 and 188 and the left walls 179 and 189 have ventilation holes 206. Specifically, the ventilation holes 206 are formed in the right walls 178 and 188 and the left walls 179 and 189 of the BMU housing section 172A. The ventilation holes 206 are open in the Y direction from between the blocked rear walls 177 and 187 and the battery module 16 on the rear side toward the outside. Also, the ventilation holes 206 penetrate the right walls 178 and 188 and the left walls 179 and 189 in the Y direction. Note that the ventilation hole 206 is made up of a cutout 206A formed in the lower case 174 and a cutout 206B (FIG. 25) formed in the upper case 184 (FIG. 25).

### [Function of battery pack]

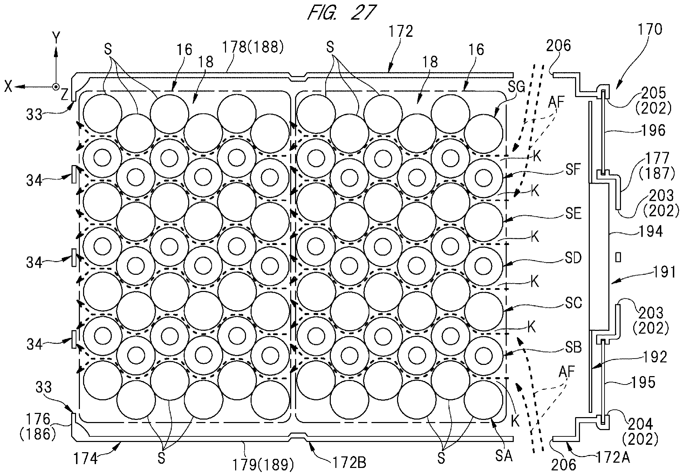

As illustrated in FIG. 27, the hole section 202 in the rear walls 177 and 187 is closed by the housing member 191. For this reason, it is difficult for the air AF outside the case unit 172 to pass through the hole section 202.

Here, the BMU housing section 172A in the right walls 178 and 188 and the left walls 179 and 189 has the ventilation holes 206 that open in the Y direction. Therefore, the air AF can flow from the outside of the case unit 172 through the ventilation holes 206 into the case unit 172 and flow toward the plurality of flow paths K. Then, the air AF that has flown into the case unit 172 flows through the plurality of flow paths K, whereby the plurality of battery cells S of the two cell groups 18 can be cooled. This can promote heat dissipation from the plurality of battery cells S. The air AF that has flown through the flow paths K flows to the outside of the case unit 172 from the hole sections 33 in the front walls 176 and 186.

Furthermore, no hole sections are formed in the right walls 178 and 188 and the left walls 179 and 189 of the module housing section 172B. This makes it possible to prevent the air AF that has flown into the case unit 172 through the ventilation holes 206 from immediately flowing out to the outside of the case unit 172. Note that the flow of the air AF may be either a forced flow or a natural flow. In other words, the flow of the air AF may be either a forced flow generated by using a blower such as a fan or a natural flow generated by a temperature difference.

### [Modification]

In the following, modifications different from the previously described embodiments will be described. Note that the same or similar components as those in the previously described embodiments will be denoted by the same reference characters, and repetitive descriptions will be omitted.

The first member 106 and the second member 126 do not necessarily have wall portions as long as they can hold the plurality of battery cells S. For example, the plurality of battery cells S may be held by a plurality of pins standing upright in the Z direction instead of the first wall portions 116 and the second wall portions 136.

The cell holder 102 and the holding unit 104 may hold the plurality of battery cells S such that the plurality of battery cells S is arranged in a straight line when viewed in the X direction. The holding unit 104 is not limited to one including the first member 106 and the second member 126, and may be formed of, for example, a single member whose cross-sectional shape on the Y-Z plane is a U-shape that is open to one side in the Y direction.

Portions of the second wall portions 136 do not necessarily protrude beyond the first surface 128A. For example, the position of the end surface of the second wall portions 136 in the Z direction may be aligned with the position of the first surface 128A in the Z direction. Also, the first wall portions 116 are not necessarily recessed beyond the second surface 108B. For example, the position of the end surface of the first wall portions 116 in the Z direction may be aligned with the position of the second surface 108B in the Z direction.

In the battery pack 10 and the cell holder 102, the guide unit 51 is not necessarily provided in the case unit 22. For example, the configuration in which the positioning unit is provided in the cell holder 102 and the cell holder 102 is positioned by the contact between the positioning unit and the case unit 22 is also possible.

The notches 114 may be provided in only one of the first member 106 and the second member 126. The protrusions 54 may be provided in the cell holder 102, and the notches 114 may be provided in the guide unit 51. The shape of the ventilation hole 53 may be a polygon, a circle, or an oval other than a rectangle. The grooves 124 and 144 are not necessarily provided in the cell holder 102.

The number of cell holders 102 is not limited to two, and may be one or a plurality such as three or more (natural number n). In the battery pack 10, it is also possible to arrange the plurality of cell holders 102 not only in the X direction but also in the Y direction.

In the first embodiment, as an example, the central axis C of the battery cell S is along the Z direction (up-down direction), but the battery pack 10 and the cell holder 102 may be arranged such that the central axis C is along the X direction, the Y direction, or an oblique direction intersecting them. The Z direction is set as the up-down direction only for the purpose of describing the arrangement of each component, and the Z direction may also be set as the left-right direction, the front-rear direction, or the oblique direction.

The number of battery cells S in the Y direction may be a plurality other than seven. Furthermore, the number of battery cells S in the X direction may be a plurality other than six. The plurality of battery cells S constituting the battery strings may be arranged in, for example, repetitive patterns in which n (two or more) battery cells S are arranged in a straight line in the X direction and n battery cells S are arranged in a straight line with their positions shifted in the Y direction. Alternatively, they may be arranged in a pattern in which n battery cells S are arranged in a straight line in the X direction and a number of battery cells S different from n are arranged in a straight line with their positions shifted in the Y direction. In short, it is sufficient that the battery cells S in each of the battery strings include two adjacent battery cells S whose positions are shifted in the Y direction. Such an arrangement of the plurality of battery cells S can also make the flow path K formed between the battery strings into a shape other than a straight line (for example, a meandering shape). Since this increases the contact area between the gas and the battery cells S and makes the turbulence likely to occur, it is possible to promote heat dissipation from the battery cells S.

As for the busbar units 76, the upper busbars 78 and the lower busbars 78 may have different shapes from each other. As for the terminals 84, the upper terminal 84 and the lower terminal 84 may have different shapes from each other.

The gas is not limited to the air AF, but may be a gas other than the air AF. Also, the gas may be a mixed gas containing the air AF.

The first interval L3 and the second interval L4 may be equal to each other.

In the foregoing, the present invention has been specifically described based on each embodiment, but it goes without saying that the present invention should not be interpreted as being limited to these embodiments, and various modifications are possible within the range not departing from the gist of the present invention.

### REFERENCE SIGNS LIST

10...battery pack, 16...battery module, 22...case unit, 32... front wall (side wall), 33...hole section, 36...rear wall (side wall), 37...hole section, 38...right wall (other side wall), 42...left wall (other side wall), 51...guide unit (positioning unit), 52... lower guide member (wall member), 53... ventilation hole (hole section), 54...protrusion, 64...front wall (side wall), 65...rear wall (side wall), 66...right wall (other side wall), 67... left wall (other side wall), 72...upper guide member (wall member), 76...busbar unit (conductive unit), 78...busbar (first conductive member, second conductive member), 102...cell holder, 104...holding unit, 105... opening section, 106... first member, 108...first frame portion, 108B...second surface (end surface), 114...notch, 116...first wall portion, 124...groove, 126...second member, 128... second frame portion, 128A... first surface (end surface), 134...notch, 136...second wall portion, 144...groove, 150...battery pack, 160...battery pack, 164...hole section (other hole section), 170...battery pack, 172...case unit, 176...front wall (side wall), 177...rear wall (side wall), 178...right wall (other side wall), 179...left wall (other side wall), 186...front wall (side wall), 187...rear wall (side wall), 188...right wall (other side wall), 189...left wall (other side wall), 206...ventilation hole, AF...air (gas), d1...interval, d2... interval, L1... first interval, L2...second interval, L3... first interval, L4...second interval, S...battery cell, S1...battery string, S2...battery string, S3...battery string, S4...battery string, S5...battery string, S6...battery string, S7...battery string, SA...battery string, SB...battery string, SC...battery string, SD...battery string, SE...battery string, SF...battery string, SG...battery string, T1...terminal portion, T2...terminal portion, X...direction (first direction), Y... direction (second direction), Y1...interval, Z...direction (axial direction)

## Claims

1. A cell holder configured to hold a plurality of battery strings in which a plurality of battery cells is arranged in a first direction intersecting an axial direction of the battery cell, the cell holder comprising:
a holding unit configured to hold the plurality of battery strings such that the plurality of battery strings is arranged at intervals in a second direction intersecting both the axial direction and the first direction; and
an opening section configured to allow a gas to flow in and out between the plurality of battery strings held by the holding unit.

2. The cell holder according to claim 1,
wherein the holding unit holds the plurality of battery strings such that the battery cells in each of the battery strings include two adjacent battery cells whose positions are shifted in the second direction.

3. The cell holder according to claim 1 or 2,
wherein the holding unit includes:
a first member configured to hold one end portions of the plurality of battery strings in the axial direction; and
a second member configured to hold the other end portions of the plurality of battery strings in the axial direction, and
wherein the first member and the second member are located at an interval in the axial direction, thereby functioning as the opening section.

4. The cell holder according to claim 3,
wherein the second member includes a plurality of second wall portions configured to hold the plurality of battery strings and a second frame portion configured to support the plurality of second wall portions, and
wherein portions of the plurality of second wall portions protrude toward the first member beyond an end surface of the second frame portion in the axial direction.

5. The cell holder according to claim 3,
wherein the first member includes a plurality of first wall portions configured to hold the plurality of battery strings and a first frame portion configured to support the plurality of first wall portions, and
wherein the plurality of first wall portions is recessed toward a side opposite to the second member beyond an end surface of the first frame portion in the axial direction.

6. A battery module comprising:
a plurality of battery strings in which a plurality of battery cells is arranged in a first direction intersecting an axial direction of the battery cell; and
a cell holder configured to hold the plurality of battery strings such that the plurality of battery strings is arranged at intervals in a second direction intersecting both the axial direction and the first direction,
wherein, in each of the plurality of battery strings, the battery cells are arranged, with a polarity of terminal portions of the battery cells aligned, and in the plurality of battery strings, the polarities of the terminal portions alternately differ in the second direction.

7. A battery pack comprising:
a plurality of battery strings in which a plurality of battery cells is arranged in a first direction intersecting an axial direction of the battery cell;
a cell holder configured to hold the plurality of battery strings such that the plurality of battery strings is arranged at intervals in a second direction intersecting both the axial direction and the first direction;
a conductive unit extending in the first direction and configured to electrically connect terminal portions of the plurality of battery cells; and
a case unit configured to house the plurality of battery strings, the cell holder, and the conductive unit and having a pair of side walls located at an interval in the first direction, the pair of side walls having hole sections that are open in the first direction.

8. The battery pack according to claim 7,
wherein the cell holder holds the plurality of battery strings such that the battery cells in each of the battery strings include two adjacent battery cells whose positions are shifted in the second direction.

9. The battery pack according to claim 7,
wherein, in each of the plurality of battery strings, the battery cells are arranged, with a polarity of terminal portions of the battery cells aligned, and in the plurality of battery strings, the polarities of the terminal portions alternately differ in the second direction, and
wherein the conductive unit electrically connects the plurality of terminal portions adjacent in the second direction and extends in the first direction.

10. The battery pack according to claim 9,
wherein a plurality of battery modules each having the plurality of battery strings and the cell holder is arranged in the first direction,
wherein the conductive unit includes:
a first conductive member configured to electrically connect the plurality of terminal portions located on one end side in the axial direction in the plurality of battery modules; and
a second conductive member configured to electrically connect the plurality of terminal portions located on the other end side in the axial direction in the plurality of battery modules, and
wherein the first conductive member and the second conductive member are positioned so as to be offset in the second direction by one row of the battery string.

11. The battery pack according to any one of claims 7 to 10,
wherein the cell holder is provided with a groove extending in the first direction while meandering to both sides in the second direction and configured to restrict a movement of the conductive unit.

12. The battery pack according to any one of claims 7 to 10,
wherein the case unit is provided with a positioning unit configured to position the cell holder in the first and second directions.

13. The battery pack according to claim 12,
wherein the cell holder is provided with a notch recessed in the first direction,
wherein the positioning unit includes a wall member that stands upright in the axial direction inside the case unit, and
wherein the wall member is provided with a hole section penetrating the wall member in the first direction and a protrusion capable of coming into contact with the notch.

14. The battery pack according to claim 8,
wherein a plurality of battery modules each having the plurality of battery strings and the cell holder is arranged at first intervals in the first direction,
wherein the plurality of battery strings is located at second intervals narrower than the first interval in the second direction,
wherein the case unit includes a pair of other side walls located on outer sides relative to the plurality of battery modules in the second direction and facing the plurality of battery modules in the second direction, and
wherein the pair of other side walls are blocked.

15. The battery pack according to claim 14,
wherein the pair of side walls are blocked, and
wherein the pair of other side walls have ventilation holes that are open toward outside between the blocked side walls and the battery modules.

16. The battery pack according to claim 8,
wherein a plurality of battery modules each having the plurality of battery strings and the cell holder is arranged at first intervals in the first direction,
wherein the plurality of battery strings is located at second intervals larger than the first interval in the second direction,
wherein the case unit includes a pair of other side walls located on outer sides relative to the plurality of battery modules in the second direction and facing the plurality of battery modules in the second direction, and
wherein the pair of other side walls have other hole sections that are open toward the plurality of battery modules.
